(19) Europäisches Patentamt
European Patent Office
Office européen des brevets

(11) **EP 4 647 308 A1**

(12) **EUROPEAN PATENT APPLICATION**
published in accordance with Art. 153(4) EPC

(43) Date of publication:
**12.11.2025 Bulletin 2025/46**

(21) Application number: **24749565.8**

(22) Date of filing: **22.01.2024**

(51) International Patent Classification (IPC):
**B60W 30/06** (2006.01)

(52) Cooperative Patent Classification (CPC):
**B60W 30/06; B60W 60/00**

(86) International application number:
**PCT/CN2024/073523**

(87) International publication number:
**WO 2024/160084 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2023 CN 202310118816**

(71) Applicant: **Shenzhen Yinwang Intelligent
Technologies Co., Ltd.
Shenzhen, Guangdong 518110 (CN)**

(72) Inventor: **ZHOU, Huiming
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **AUTOMATIC PARKING METHOD, APPARATUS AND SYSTEM**

(57)    An auto parking method, an apparatus, and a system are provided, and relate to the field of intelligent driving technologies, to implement efficient and accurate auto parking in a parallel parking scenario. When auto parking path planning is performed, an auto parking system processes a parking process in stages, for example, in a parking entry stage and a parking adjustment stage, to fully combine a parking entry capability and a parking adjustment capability to improve path search efficiency and a path search success rate of auto parking. In the parking entry stage, the auto parking system determines, through calculation, a target status set for easy parking entry. At any target status point in the target status set, a posture for easy parking entry in an ultra-narrow parallel parking scenario is fully considered. Therefore, a good parking entry target pose can be obtained. In this way, difficulty of performing parking entry is reduced, and path search efficiency and a path search success rate in the parking entry stage are improved. In the parking adjustment stage, the auto parking system adjusts a vehicle to a target pose in a parking space by performing real-time perception on nearby obstacles and making full use of a drivable area.

FIG. 5A

(Cont. next page)

CONT.
FROM
FIG. 5A

S505

The auto parking system performs smoothing on the path of the vehicle from the initial pose to the first target status point, to obtain a second path

S506

The auto parking system determines a parking entry speed strategy corresponding to the second path, to obtain a first track

S507

The auto parking system indicates the vehicle to travel to the first target status point based on the planned first track

S508

The auto parking system determines a third path of the vehicle in a parking space area based on a real-time pose of the vehicle

S509

The auto parking system determines a speed strategy corresponding to the third path, to obtain a second track

S510

The auto parking system indicates the vehicle to be parked into the parking space based on the planned second track

FIG. 5B

## Description

This application claims priority to Chinese Patent Application No. 202310118816.3, filed with the China National Intellectual Property Administration on January 31, 2023 and entitled "AUTO PARKING METHOD, APPARATUS, AND SYSTEM", which is incorporated herein by reference in its entirety.

## TECHNICAL FIELD

This application relates to the field of intelligent driving technologies, and in particular, to an auto parking method, an apparatus, and a system.

## BACKGROUND

With wide application of an autonomous driving technology in an advanced driver assistant system (advanced driver assistant system, ADAS), an autonomous driving (autonomous driving, AD) system, or the like, an auto parking technology becomes an important research field for greatly improving user experience.

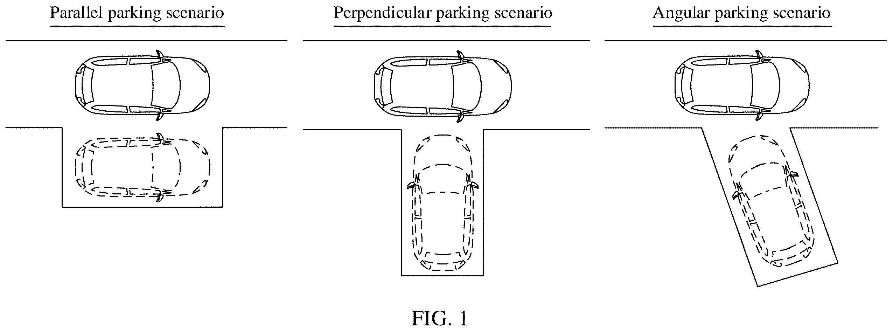

Generally, the autonomous driving system may complete, based on a parking scenario, auto parking according to a corresponding auto parking algorithm. Common parking scenarios are a parallel parking scenario, a perpendicular parking scenario, an angular parking scenario, and the like shown in FIG. 1. In the foregoing parking scenarios, the parallel parking scenario is encountered at a higher frequency. In addition, auto parking in the parallel parking scenario usually needs to be completed through a plurality of times of gear switching and vehicle starting/stopping, making it the most technically challenging, especially in a parallel parking scenario with obstacles around and narrow parking spaces. Therefore, how to implement efficient and accurate auto parking in a parallel parking scenario becomes an important research direction.

## SUMMARY

This application provides an auto parking method, an apparatus, and a system, to implement efficient and accurate auto parking in a parallel parking scenario.

To achieve the foregoing objective, the following technical solutions are used in this application.

According to a first aspect, an auto parking method is provided, applied to a parallel parking scenario. The method includes: obtaining an initial pose of a vehicle and a vehicle drivable area, where the vehicle drivable area includes a parking space area; determining a first target status point based on a first constraint condition and a second constraint condition, where the first target status point indicates a position and a posture of the vehicle entering the parking space area from the initial pose; planning a first track from the initial pose to the first target status point; and after the vehicle reaches the first target status point from the initial pose, determining a second track of the vehicle in the parking space area based on a real-time pose of the vehicle in the parking space area. The first constraint condition is used to ensure that the vehicle is capable of traveling out of the parking space area when the vehicle enters the parking space area and moves forward from the first target status point at a first curvature, and the second constraint condition is used to ensure that the vehicle does not cross an edge of the parking space area when the vehicle enters the parking space area and moves forward from the first target status point at a second curvature.

According to the solution provided in the first aspect, according to the solution provided in this application, when auto parking track planning is performed, an auto parking system processes a parking process in stages, for example, in a parking entry stage and a parking adjustment stage, to fully combine a parking entry capability and a parking adjustment capability to improve path search efficiency and a path search success rate of auto parking. In the parking entry stage, the auto parking system determines, through calculation, a target status set for easy parking entry. At any target status point in the target status set, a posture for easy parking entry in an ultra-narrow parallel parking scenario is fully considered. Therefore, a good parking entry target pose can be obtained. In this way, the difficulty of performing parking entry is reduced, and path search efficiency and a path search success rate in the parking entry stage are improved. In the parking adjustment stage, the auto parking system adjusts a pose of a vehicle inside a parking space to a target pose by performing real-time perception on nearby obstacles and making full use of a drivable area.

In a possible implementation, the determining a first target status point based on a first constraint condition and a second constraint condition includes: determining a first pose based on the first constraint condition, where the first pose indicates an extreme pose in which the vehicle is capable of traveling out of the parking space area when the vehicle enters the parking space area and moves forward at the first curvature; determining a second pose based on the second constraint condition, where the second pose indicates an extreme pose in which the vehicle does not cross the edge of the parking space area when the vehicle enters the parking space area and moves forward at the second curvature; determining, based on the first pose and the second pose, a target area for the vehicle to enter the parking space area, where the target area includes a plurality of target status points; and determining the first target status point in the target area, where the first target status point is any status point in the target area. In view of this, a target status point set that can be used to ensure that the vehicle can smoothly exit the parking space after parking entry is performed and ensure a capability of the vehicle to perform parking adjustment subsequently in the parking space may be determined. Any status point in the target status point set may be used as a target status point in the parking entry stage.

In a possible implementation, the determining the first target status point in the target area includes: determining the first target status point in the target area according to a preset strategy. In view of this, it can be ensured that the first target status point can be used to ensure that the vehicle can smoothly exit the parking space after parking entry is performed, and ensure a capability of the vehicle to perform parking adjustment subsequently in the parking space.

For example, the first target status point may be an intermediate status point during interpolation between the first pose and the second pose. Certainly, the first target status point may alternatively be another status point in the target area. This is not specifically limited in this application.

In a possible implementation, determining, based on the first pose and the second pose, the target area for the vehicle to enter the parking space area includes: determining the target area based on tracks through which the vehicle separately moves forward from the first pose and the second pose at the first curvature. In view of this, status recursion curves corresponding to the first pose and the second pose may be obtained, where any status point in an enclosed area on the status recursion curves respectively corresponding to the first pose and the second pose can be used to ensure that the vehicle smoothly enters and exits the parking space and ensure a capability of the vehicle to perform parking adjustment in the parking space.

In a possible implementation, planning the first track from the initial pose to the first target status point includes: determining a first path from the initial pose to the first target status point; performing smoothing on the first path to obtain a second path; and performing parking entry speed planning on the second path, to obtain the first track. In view of this, a continuous and highly follow-up parking entry track can be obtained.

In a possible implementation, determining the rough path from the initial pose to the first target status point includes: determining the rough path from the initial pose to the first target status point. In view of this, a first continuous and highly follow-up track can be obtained.

In a possible implementation, first information is considered in the path search algorithm. For example, the rough path from the initial pose to the first target status point may be determined based on the first information according to the path search algorithm. The first information includes a shortest distance for obstacle avoidance in a two-dimensional discrete space between a status point that the vehicle passes through and the first target status point. In view of this, during path search, obstacle avoidance can be considered, and a shortest path can be found as much as possible.

In a possible implementation, second information is further considered in the path search algorithm. For example, the rough path from the initial pose to the first target status point may be determined based on the second information according to the path search algorithm. The second information includes one or more of the following: a quantity of curvature changes of the vehicle, a quantity of times of gear switching of the vehicle, and a length of a shortest RS curve between the initial pose and the first target status point. In view of this, during path search, actual conditions such as a quantity of curvature changes, a quantity of times of gear switching, and an RS curve length of the vehicle may be further considered, to obtain a more scientific, appropriate, and accurate parking entry path.

In a possible implementation, the path search algorithm is a hybrid A*+RS curve search algorithm. In view of this, because an RS curve between one status point and another status point may be a plurality of combinations of circles and straight lines, a plurality of feasible path solutions between the two status points may be found. In this case, searching is easier, and a search success rate is higher. Therefore, this better meets a vehicle parking requirement.

In a possible implementation, when the vehicle is in the initial pose, the parking space area is located on a right side of the vehicle. The first curvature corresponds to a moving curvature of the vehicle during maximum left-turn steering, and the second curvature corresponds to a moving curvature of the vehicle during maximum right-turn steering. In view of this, it can be ensured that the target status point in the parking entry stage can be used to ensure that the vehicle can smoothly exit the parking space after parking entry is performed, and ensure a capability of the vehicle to perform parking adjustment subsequently in the parking space.

In a possible implementation, when the vehicle is in the initial pose, the parking space area is located on a left side of the vehicle. The first curvature corresponds to a moving curvature of the vehicle during maximum right-turn steering, and the second curvature corresponds to a moving curvature of the vehicle during maximum left-turn steering. In view of this, it can be ensured that the target status point in the parking entry stage can be used to ensure that the vehicle can smoothly exit the parking space after parking entry is performed, and ensure a capability of the vehicle to perform parking adjustment subsequently in the parking space.

In a possible implementation, determining the second track of the vehicle in the parking space area based on the real-time pose of the vehicle in the parking space area includes: obtaining real-time ambient environment information of the vehicle in the parking space area; and performing one or more times of gear switching and one or more curvature changes based on the real-time pose of the vehicle in the parking space area and the real-time ambient environment information, so that the vehicle meets a third constraint condition. In view of this, dynamic adjustment of a posture and a lateral error in a parking lot may be performed based on detected information of an ambient environment of the vehicle in the parking space, so that accuracy of path planning in the parking adjustment stage can be greatly improved.

For example, the real-time ambient environment information of the vehicle in the parking space area may be obtained based on an ultrasonic radar. It may be understood that, in a narrow parking space, in comparison with another positioning technology, in this solution, an environment in the parking space detected by the ultrasonic radar is more accurate, and a detection speed is faster, so that accuracy of parking adjustment path planning can be greatly improved.

In a possible implementation, the third constraint condition includes: An included angle between the vehicle and the parking space is less than a preset angle; and a distance between a center point of the vehicle and a center point of the parking space is less than a preset distance. In view of this, it can be ensured that the vehicle is safely parked into the parking space in an appropriate pose.

In a possible implementation, the method further includes: obtaining ambient environment information in a process in which the vehicle is parked into the parking space, where the ambient environment information includes a position, a size, a moving direction, and a moving speed of a target object in a preset range of the vehicle; and controlling the vehicle to stop when it is predicted that the vehicle is about to collide with the target object. In view of this, an obstacle can be accurately avoided in a parking process, to ensure safety of the vehicle and a person.

In a possible implementation, in a process in which the vehicle reaches the first target status point from the initial pose, the ambient environment information further includes a static obstacle in the preset range of the vehicle. The method further includes: updating the vehicle drivable area in real time based on position information of the static obstacle. In view of this, an obstacle can be accurately avoided in a parking entry process, to ensure safety of the vehicle and a person.

According to a second aspect, an auto parking system is provided. The auto parking system includes: a data obtaining unit, configured to obtain an initial pose of a vehicle and a vehicle drivable area, where the vehicle drivable area includes a parking space area; and a processing unit, configured to: determine a first target status point based on a first constraint condition and a second constraint condition; plan a first track from the initial pose to the first target status point; and after the vehicle reaches the first target status point from the initial pose, determine a second track of the vehicle in the parking space area based on a real-time pose of the vehicle in the parking space area. The first target status point indicates a position and a posture of the vehicle entering the parking space area from the initial pose. The first constraint condition is used to ensure that the vehicle is capable of traveling out of the parking space area when the vehicle enters the parking space area and moves forward from the first target status point at a first curvature, and the second constraint condition is used to ensure that the vehicle does not cross an edge of the parking space area when the vehicle enters the parking space area and moves forward from the first target status point at a second curvature.

According to the solution provided in the second aspect, according to the solution provided in this application, when auto parking track planning is performed, an auto parking system processes a parking process in stages, for example, in a parking entry stage and a parking adjustment stage, to fully combine a parking entry capability and a parking adjustment capability to improve path search efficiency and a path search success rate of auto parking. In the parking entry stage, the auto parking system determines, through calculation, a target status set for easy parking entry. At any target status point in the target status set, a posture for easy parking entry in an ultra-narrow parallel parking scenario is fully considered. Therefore, a good parking entry target pose can be obtained. In this way, the difficulty of performing parking entry is reduced, and path search efficiency and a path search success rate in the parking entry stage are improved. In the parking adjustment stage, the auto parking system adjusts a pose of a vehicle inside a parking space to a target pose by performing real-time perception on nearby obstacles and making full use of a drivable area.

In a possible implementation, the data obtaining unit includes a perception unit, configured to collect ambient environment data to obtain the vehicle drivable area. In view of this, an obstacle can be accurately avoided in a parking process, to ensure safety of the vehicle and a person.

In a possible implementation, that the processing unit determines the first target status point based on the first constraint condition and the second constraint condition includes: The processing unit determines a first pose based on the first constraint condition, where the first pose indicates an extreme pose in which the vehicle is capable of traveling out of the parking space area when the vehicle enters the parking space area and moves forward at the first curvature; the processing unit determines a second pose based on the second constraint condition, where the second pose indicates an extreme pose in which the vehicle does not cross the edge of the parking space area when the vehicle enters the parking space area and moves forward at the second curvature; the processing unit determines, based on the first pose and the second pose, a target area for the vehicle to enter the parking space area, where the target area includes a plurality of target status points; and the processing unit determines the first target status point in the target area, where the first target status point is any status point in the target area. In view of this, a target status point set that can be used to ensure that the vehicle can smoothly exit the parking space after parking entry is performed and ensure a capability of the vehicle to perform parking adjustment subsequently in the parking space may be determined. Any status point in the target status point set may be used as a target status point in the parking entry stage.

In a possible implementation, that the processing unit determines the first target status point in the target area includes: The processing unit determines the first target status point in the target area according to a preset strategy. In view of this, it can be ensured that the first target status point can be used to ensure that the vehicle can smoothly exit the parking space after parking entry is performed, and ensure a capability of the vehicle to perform parking adjustment subsequently in the parking space.

For example, the first target status point may be an intermediate status point during interpolation between the first pose and the second pose. Certainly, the first target status point may alternatively be another status point in the target area. This is not specifically limited in this application.

In a possible implementation, that the processing unit determines, based on the first pose and the second pose, the target area for the vehicle to enter the parking space area includes: The processing unit determines the target area based on tracks through which the vehicle separately moves forward from the first pose and the second pose at the first curvature. In view of this, status recursion curves corresponding to the first pose and the second pose may be obtained, where any status point in an enclosed area on the status recursion curves respectively corresponding to the first pose and the second pose can be used to ensure that the vehicle smoothly enters and exits the parking space and ensure a capability of the vehicle to perform parking adjustment in the parking space.

In a possible implementation, that the processing unit plans the first track from the initial pose to the first target status point includes: The processing unit determines a first path from the initial pose to the first target status point; the processing unit performs smoothing on the first path to obtain a second path; and the processing unit performs parking entry speed planning on the second path, to obtain the first track. In view of this, a continuous and highly follow-up parking entry track can be obtained.

In a possible implementation, that the processing unit determines the rough path from the initial pose to the first target status point includes: The processing unit determines the rough path from the initial pose to the first target status point according to a path search algorithm. In view of this, a continuous and highly follow-up parking entry track can be obtained.

In a possible implementation, first information is considered in the path search algorithm. For example, the processing unit may determine the rough path from the initial pose to the first target status point based on the first information according to the path search algorithm. The first information includes a shortest distance for obstacle avoidance in a two-dimensional discrete space between a status point that the vehicle passes through and the first target status point. In view of this, during path search, obstacle avoidance can be considered, and a shortest path can be found as much as possible.

In a possible implementation, second information is further considered in the path search algorithm. For example, the processing unit may determine the rough path from the initial pose to the first target status point based on the second information according to the path search algorithm. The second information includes one or more of the following: a quantity of curvature changes of the vehicle, a quantity of times of gear switching of the vehicle, and a length of a shortest RS curve between the initial pose and the first target status point. In view of this, during path search, actual conditions such as a quantity of curvature changes, a quantity of times of gear switching, and an RS curve length of the vehicle may be further considered, to obtain a more scientific, appropriate, and accurate parking entry path.

In a possible implementation, the path search algorithm is a hybrid A*+RS curve search algorithm. In view of this, because an RS curve between one status point and another status point may be a plurality of combinations of circles and straight lines, a plurality of feasible path solutions between the two status points may be found. In this case, searching is easier, and a search success rate is higher. Therefore, this better meets a vehicle parking requirement.

In a possible implementation, when the vehicle is in the initial pose, the parking space area is located on a right side of the vehicle. The first curvature corresponds to a moving curvature of the vehicle during maximum left-turn steering, and the second curvature corresponds to a moving curvature of the vehicle during maximum right-turn steering. In view of this, it can be ensured that the target status point in the parking entry stage can be used to ensure that the vehicle can smoothly exit the parking space after parking entry is performed, and ensure a capability of the vehicle to perform parking adjustment subsequently in the parking space.

In a possible implementation, when the vehicle is in the initial pose, the parking space area is located on a left side of the vehicle. The first curvature corresponds to a moving curvature of the vehicle during maximum right-turn steering, and the second curvature corresponds to a moving curvature of the vehicle during maximum left-turn steering. In view of this, it can be ensured that the target status point in the parking entry stage can be used to ensure that the vehicle can smoothly exit the parking space after parking entry is performed, and ensure a capability of the vehicle to perform parking adjustment subsequently in the parking space.

In a possible implementation, that the processing unit determines the second track of the vehicle in the parking space area based on the real-time pose of the vehicle in the parking space area includes: The processing unit obtains real-time ambient environment information of the vehicle in the parking space area; and the processing unit performs one or more times of gear switching and one or more curvature changes based on the real-time pose of the vehicle in the parking space area and the real-time ambient environment information, so that the vehicle meets a third constraint condition. In view of this, dynamic adjustment of a posture and a lateral error in a parking lot may be performed based on detected information of an ambient environment of the vehicle in the parking space, so that accuracy of path planning in the parking adjustment stage can be greatly improved.

For example, the real-time ambient environment information of the vehicle in the parking space area may be obtained based on an ultrasonic radar. It may be understood that, in a narrow parking space, in comparison with another positioning technology, in this solution, an environment in the parking space detected by the ultrasonic radar is more accurate, and a detection speed is faster, so that accuracy of parking adjustment path planning can be greatly improved.

In a possible implementation, the third constraint condition includes: An included angle between the vehicle and the parking space is less than a preset angle; and a distance between a center point of the vehicle and a center point of the parking space is less than a preset distance. In view of this, it can be ensured that the vehicle is safely parked into the parking space in an appropriate pose.

In a possible implementation, the processing unit is further configured to: obtain ambient environment information in a process in which the vehicle is parked into the parking space; and control the vehicle to stop when it is predicted that the vehicle is about to collide with a target object. The ambient environment information includes a position, a size, a moving direction, and a moving speed of the target object in a preset range of the vehicle. In view of this, an obstacle can be accurately avoided in a parking process, to ensure safety of the vehicle and a person.

In a possible implementation, in a process in which the vehicle reaches the first target status point from the initial pose, the ambient environment information further includes a static obstacle in the preset range of the vehicle. The processing unit is further configured to update the vehicle drivable area in real time based on position information of the static obstacle. In view of this, an obstacle can be accurately avoided in a parking entry process, to ensure safety of the vehicle and a person.

According to a third aspect, an auto parking system is provided. The auto parking system includes a communication interface, configured to perform communication between devices; a memory, configured to store computer program instructions; and a processor, configured to execute the computer program instructions, to support the auto parking system in implementing the method according to any one of the possible implementations of the first aspect.

According to a fourth aspect, a vehicle is provided. The vehicle includes the auto parking system according to either of the second aspect or the third aspect. The vehicle is configured to implement the method according to any one of the possible implementations of the first aspect.

According to a fifth aspect, a computer-readable storage medium is provided. The computer-readable storage medium stores computer program instructions. When the computer program instructions are executed by a processor, the method according to any one of the possible implementations of the first aspect is implemented.

According to a sixth aspect, a computer program product including instructions is provided. When the computer program product runs on a computer, the computer is enabled to implement the method according to any one of the possible implementations of the first aspect.

According to a seventh aspect, a chip system is provided. The chip system includes a processing circuit and a storage medium. The storage medium stores computer program instructions. When the computer program instructions are executed by a processor, the method according to any one of the possible implementations of the first aspect is implemented. The chip system may include a chip, or may include a chip and another discrete component.

**BRIEF DESCRIPTION OF DRAWINGS**

FIG. 1 is a diagram of several common parking scenarios;
FIG. 2 is a diagram of two parallel parking scenarios according to an embodiment of this application;
FIG. 3 is a diagram of parking results in two parallel parking scenarios according to an embodiment of this application;
FIG. 4 is a block diagram of a structure of an auto parking system according to an embodiment of this application;
FIG. 5A and FIG. 5B are a diagram of an auto parking process according to an embodiment of this application;
FIG. 6 is a diagram of a grid of a vehicle drivable area according to an embodiment of this application;
FIG. 7 is a diagram of a condition met by a first pose in a parking entry stage according to an embodiment of this application;
FIG. 8 is a diagram of a condition met by a second pose in a parking entry stage according to an embodiment of this application;
FIG. 9 is a diagram of a method for determining a first pose in a parking entry stage according to an embodiment of this application;
FIG. 10 is a diagram of a method for determining a second pose in a parking entry stage according to an embodiment of this application;
FIG. 11 is a diagram of an attitude angle interpolation method according to an embodiment of this application;
FIG. 12 is a diagram of a method for obtaining a target area according to an embodiment of this application;

FIG. 13A and FIG. 13B are a diagram of a process of performing path search by using hybrid A*+RS (Reeds and Shepp) according to an embodiment of this application;

FIG. 14 is a diagram of a shortest obstacle avoidance distance from an initial pose to a target status point in a two-dimensional discrete space according to an embodiment of this application;

FIG. 15 is a diagram of a shortest RS curve from an initial pose to a target status point according to an embodiment of this application; and

FIG. 16A and FIG. 16B are a diagram of a parking adjustment process according to an embodiment of this application.

## DESCRIPTION OF EMBODIMENTS

The following describes the technical solutions in embodiments of this application with reference to the accompanying drawings in embodiments of this application. In the descriptions of embodiments of this application, "/" represents "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

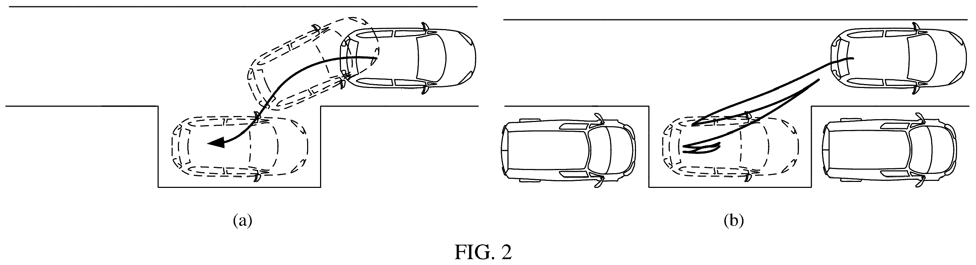

In embodiments of this application, a parallel parking scenario is a parking scenario in which a parking space is almost parallel to a vehicle. For example, refer to FIG. 2. Herein, (a) in FIG. 2 and (b) in FIG. 2 are diagrams of two parallel parking scenarios according to an embodiment of this application.

Generally, in a parallel parking scenario, if there is a sufficient space outside a parking space, a vehicle can be parked into the parking space through simple adjustment. For example, in a parallel parking scenario shown in (a) in FIG. 2, the vehicle may usually be parked in "one-shot parking".

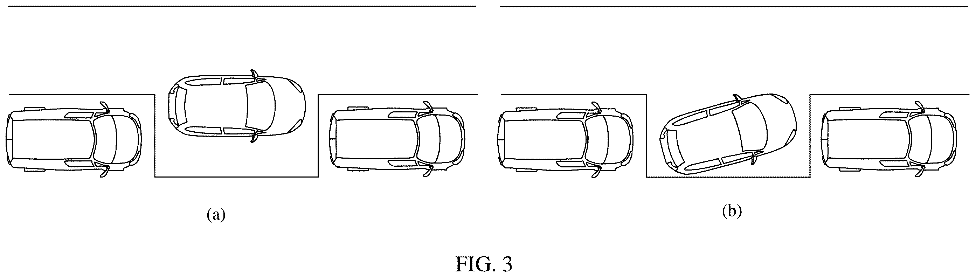

However, in an ultra-narrow parallel parking scenario, the vehicle cannot be parked into the parking space through simple adjustment. In embodiments of this application, the ultra-narrow parallel parking scenario meets but is not limited to one or more of the following conditions: a short distance to an obstacle, a narrow drivable area outside the parking space (for example, a narrow passageway outside the parking space), and a narrow parking space. For example, in comparison with the scenario shown in (a) in FIG. 2, in a scenario shown in (b) in FIG. 2, there are vehicles parked both in front of and behind the parking space. When the vehicle is to be parked into the parking space, the vehicles parked in front of and behind the parking space act as obstacles to reduce a vehicle drivable area indirectly, and therefore parking difficulty is greatly increased. In addition, in comparison with the scenario shown in (a) in FIG. 2, in the scenario shown (b) in FIG. 2, a passageway outside the parking space is narrow (for example, a width of the passageway is less than 3.5 m). Therefore, as shown in (b) in FIG. 2, the vehicle needs to repeatedly adjust a gear (for example, switch between a forward gear and a backward gear a plurality of times) and a direction, to make full use of spaces inside and outside the parking space to adjust a vehicle pose (including a position and a posture) by repeatedly performing "parking entry" and "parking exit", so as to be successfully parked into the parking space. In the foregoing process, parking is difficult, path search time is excessively long, and user experience is poor. In addition, each gear switching means starting and stopping the vehicle, and repeated starting and stopping of the vehicle cause a larger control error. Consequently, there is a large pose error between an actual path and a planned path of the vehicle. Therefore, in the scenario shown in (b) in FIG. 2, a success rate and reliability of auto parking are low. Alternatively, in the scenario shown in (b) in FIG. 2, when parking is completed, a part of a vehicle body is outside the parking space as shown in (a) in FIG. 3, or there is a large included angle between a vehicle posture and a center line of the parking space as shown in (b) in FIG. 3. This affects user experience.

To implement efficient and accurate auto parking in a parallel parking scenario, especially in an ultra-narrow parallel parking scenario, embodiments of this application provide an auto parking method. In the method, a parking process is processed in stages, for example, is divided into two stages: a parking entry stage and a parking adjustment stage. In the parking entry stage, an auto parking system determines, through calculation, a target status set for easy parking entry. At any target status point in the target status set, a posture for easy parking entry in the ultra-narrow parallel parking scenario is fully considered. Therefore, based on the auto parking method provided in embodiments of this application, parking entry path search efficiency and a parking entry path search success rate are high. In the parking adjustment stage, the auto parking system adjusts a pose of the vehicle inside the parking space to a target pose by performing real-time perception on nearby obstacles and making full use of the drivable area.

The method provided in embodiments of this application may be implemented based on an auto parking system on a vehicle. For example, the auto parking system may be an intelligent control apparatus on the vehicle, or may be an intelligent control system including a plurality of modules that cooperate with each other on the vehicle. This is not limited in embodiments of this application.

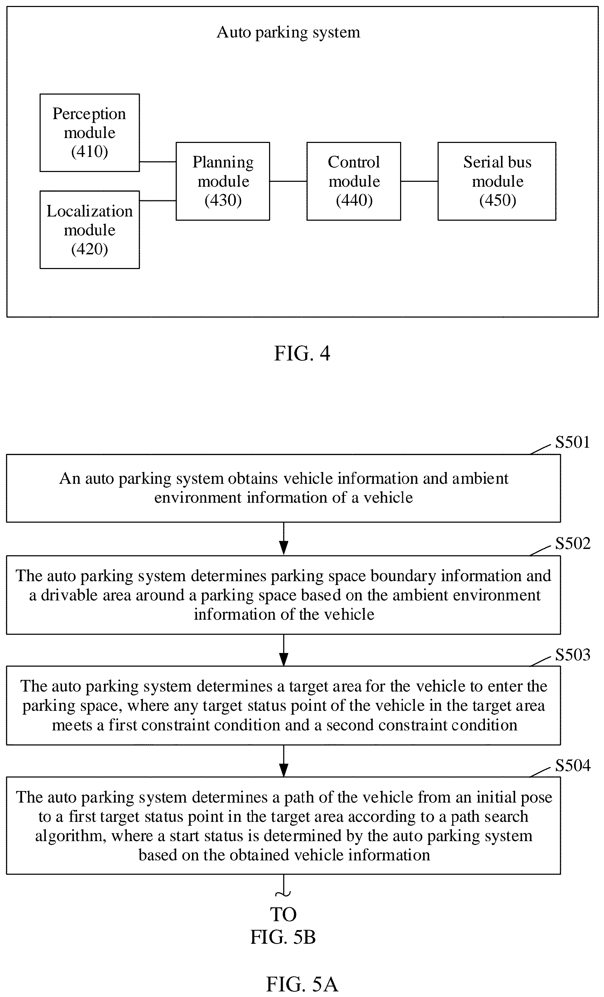

For example, refer to FIG. 4. FIG. 4 is a block diagram of a structure of an auto parking system according to an embodiment of this application. As shown in FIG. 4, the auto parking system may include a perception (perception) module 410, a localization (localization) module 420, a planning (planning) module 430, and a control (control) module 440 shown in FIG. 4.

The perception module 410 is configured to perceive ambient environment information of a vehicle, for example, information about a dynamic obstacle and information about a static obstacle in an ambient environment of the vehicle. The dynamic obstacle is, for example, a vehicle that is traveling, a pedestrian, or an animal. The static obstacle is, for example, a parking space line, a static vehicle, a tree, a road curb, a railing, a street lamp, a step, or a dent. This is not specifically limited in embodiments of this application. The perception module 410 may include one or more sensors, for example, one or more of a time of flight (time of flight, TOF) sensor, a camera (for example, an infrared camera), and a radar (for example, a millimeter-wave radar, a lidar, or an ultrasonic radar). This is not specifically limited in embodiments of this application.

The localization module 420 is configured to provide position information of the vehicle.

In some embodiments, the localization module 420 may provide absolute position information of the vehicle based on a global navigation satellite system (global navigation satellite system, GNSS).

For example, the GNSS may include but is not limited to a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In some embodiments, for example, in a scenario without GNSS coverage (for example, an underground parking lot), the localization module 420 may provide relative position information of the vehicle based on the ambient environment information of the vehicle perceived by the perception module 410 and an environment map (map) in the localization module 420. The environment map includes a map of an area in which the vehicle is currently located.

For example, the environment map in the localization module 420 may be preset in the localization module 420, or may be obtained by the localization module 420 from a cloud in real time through the Internet, or may be drawn by the localization module 420 in a historical use process through automatic image composition and stored in the localization module 420. This is not specifically limited in embodiments of this application.

In some other embodiments, the localization module 420 may provide fusion position information of the vehicle based on the absolute position information of the vehicle and the relative position information of the vehicle.

The planning module 430 is configured to perform parking path planning based on data such as the ambient environment information of the vehicle perceived by the perception module 410 and the position information of the vehicle provided by the localization module 420, including determining a target status set in a parking entry stage, planning a parking entry track, and a vehicle pose adjustment strategy in a parking adjustment stage.

In embodiments of this application, the planning module 430 is further configured to perform speed planning on a parking path based on the planned parking path, a vehicle start posture, and vehicle movement information, including parking entry speed planning in the parking entry stage and parking adjustment speed planning in the parking adjustment stage.

The control module 440 is configured to control the vehicle to move to a target pose based on the parking path and a parking speed that are planned by the planning module 430. In an example, the auto parking system may further include a serial bus module 450 shown in FIG. 4. The serial bus module 450 is configured to serve as a medium for information and instruction communication between the control module 440 and a vehicle chassis. For example, the serial bus module 450 is a controller area network bus (controller area network bus, CANBUS).

In embodiments of this application, the control module 440 is further configured to send vehicle chassis information such as a front wheel angle and a wheel speed of the vehicle to the planning module 430, so that the planning module 430 determines a start posture of the vehicle and/or vehicle movement information.

It should be noted that FIG. 4 is merely an example of a possible structure of the auto parking system, and the structure shown in embodiments of this application does not constitute a specific limitation on the auto parking system. In some other embodiments of this application, the auto parking system may include more or fewer components than those shown in the figure, or combine some components, or divide some components, or have different component arrangements. The components shown in the figure may be implemented by hardware, software, or a combination of software and hardware.

For example, the auto parking system may further include a prediction module, configured to predict, in a moving process of the vehicle, a future moving track of a dynamic obstacle in real time based on information that is about a target object (for example, the dynamic obstacle) in the ambient environment of the vehicle and that is perceived by the perception module 410, so that the vehicle can be controlled to stop when it is predicted that the vehicle is about to collide with the target object, to implement emergency obstacle avoidance, ensure traveling safety, and the like. For example, the information about the target object may include but is not limited to a position, a size, a moving direction, and a moving speed of the target object within a preset range of the vehicle.

Alternatively, for example, the auto parking system may not include a planning module, and a function of the planning module may be implemented by another device having a path planning function. The auto parking system may send vehicle information and the ambient environment information of the vehicle to the another device having the path planning function. In this way, parking track planning is completed through the device.

The following specifically describes an auto parking method provided in embodiments of this application with reference to the specific accompanying drawings.

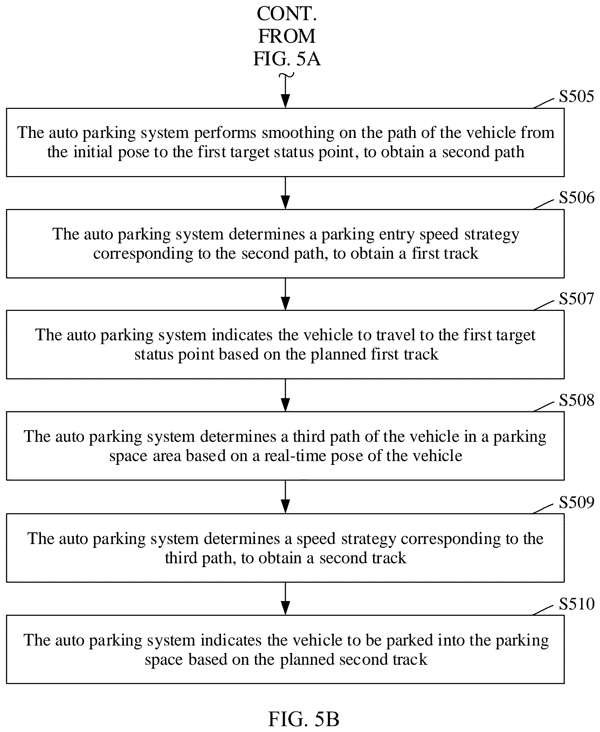

Refer to FIG. 5A and FIG. 5B. FIG. 5A and FIG. 5B are a diagram of an auto parking process according to an embodiment of this application. As shown in FIG. 5A and FIG. 5B, the auto parking process provided in embodiments of this application may mainly include S501 to S510.

S501: An auto parking system obtains vehicle information and ambient environment information of a vehicle.

The vehicle information may include but is not limited to vehicle movement information and an initial pose of the vehicle.

The vehicle movement information may include but is not limited to information such as a speed and an acceleration of the vehicle. The initial pose of the vehicle indicates a start position and a start posture of the vehicle. For example, the vehicle movement information may be determined based on vehicle chassis information such as position information and/or a wheel speed of the vehicle in a period of time. The start position of the vehicle may be determined based on the position information of the vehicle, and the start position of the vehicle may be represented by coordinates of the vehicle in a local coordinate system. The start posture of the vehicle may be determined based on vehicle chassis information such as a front wheel angle of the vehicle or a steering wheel rotation status.

The ambient environment information of the vehicle is, for example, information about a dynamic obstacle and information about a static obstacle in an ambient environment of the vehicle. The dynamic obstacle is, for example, a vehicle that is traveling, a pedestrian, or an animal. The static obstacle is, for example, a parking space line, a static vehicle, a tree, a road curb, a railing, a street lamp, a step, or a dent. This is not specifically limited in embodiments of this application.

The auto parking system with the structure shown in FIG. 4 is used as an example. In a possible implementation, the auto parking system may obtain the ambient environment information of the vehicle by using the perception module 410. For example, the perception module 410 may include one or more sensors, for example, one or more of a TOF sensor, a camera (for example, an infrared camera), and a radar (for example, a millimeter-wave radar, a lidar, or an ultrasonic radar). The perception module 410 may detect and obtain the ambient environment information of the vehicle by using at least one sensor.

The auto parking system with the structure shown in FIG. 4 is used as an example. In a possible implementation, the auto parking system may obtain the start position of the vehicle by using the localization module 420 and/or the perception module 410.

For example, in a scenario with GNSS coverage (for example, an outdoor parking lot), the auto parking system may provide the start position of the vehicle based on a GNSS, and the start position is absolute position information of the vehicle. For example, the GNSS is a GPS, a GLONASS, a BDS, a QZSS, or an SBAS.

For another example, in a scenario (for example, an underground parking lot) without GNSS coverage, the auto parking system may provide the start position of the vehicle based on the ambient environment information of the vehicle perceived by the perception module 410 and an environment map (map) in the localization module 420. The start position is relative position information of the vehicle. The environment map includes a map of an area in which the vehicle is currently located.

For another example, to ensure accuracy of determining the start position of the vehicle, the auto parking system may provide fusion position information of the vehicle based on the absolute position information of the vehicle and the relative position information of the vehicle. A specific manner and process of obtaining the start position of the vehicle are not limited in embodiments of this application, refer to a conventional technology. This is not limited in embodiments of this application.

In a possible implementation, the auto parking system may communicate with a vehicle chassis through a specific interface (for example, the serial bus module 450 shown in FIG. 4), to obtain the start posture of the vehicle from the vehicle chassis, for example, vehicle chassis information such as the front wheel angle and a wheel speed of the vehicle.

S502: The auto parking system determines parking space boundary information and a drivable area around a parking space based on the ambient environment information of the vehicle.

The parking space boundary information indicates position information of each side (including an inner long side, an outer long side, a front short side, and a rear short side) of the parking space and size information of each side of the parking space. For example, a length of the parking space is L (that is, a size of the inner long side and a size of the outer long side are L), and a width of the parking space is W (that is, a size of the front short side and a size of the rear short side are W).

In a possible implementation, the auto parking system may grid the parking space and the drivable area around the parking space as a vehicle drivable area, to prepare for subsequent parking path planning.

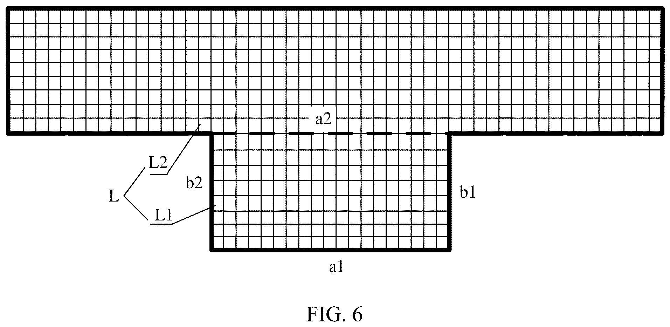

In an example, the auto parking system may divide the vehicle drivable area in an ultra-narrow parallel parking scenario into discrete spaces shown in FIG. 6 by $\Delta L$. An area L shown in FIG. 6 is the vehicle drivable area, an area L1 is the parking space area, and an area L2 is the drivable area around the parking space. For example, $\Delta L$ may be 25 cm. In the discrete space shown in FIG. 6, a1 is an inner long side, a2 is an outer long side, b1 is a front short side, and b2 is a rear short side.

It may be understood that, when the vehicle drivable area is gridded, if a basic grid unit $\Delta L$ is excessively large, a search may fail due to excessively low discrete precision of the drivable area. However, if the basic grid unit $\Delta L$ is excessively small, a calculation amount may be excessively large due to excessively high discrete precision of the drivable area, affecting real-time performance of an algorithm. In embodiments of this application, the auto parking system may comprehensively consider one or more of the following factors to select an appropriate $\Delta L$ for gridding of the drivable area: a computing capability of the auto parking system, a size of the vehicle drivable area, an ambient environment of the vehicle, and a user requirement.

It should be noted that, in embodiments of this application, that the auto parking system automatically determines the parking space boundary information based on the ambient environment information of the vehicle is merely used as an example. However, this is not limited in embodiments of this application. In some other embodiments, the auto parking system may alternatively determine the parking space boundary information based on an area selected by a user on a user interface (user interface, UI). In some embodiments, after the user selects the area on the UI, the auto parking system may further perform feasibility analysis on the area selected by the user, to avoid a safety accident caused by a misoperation of the user.

S503: The auto parking system determines a target area for the vehicle to enter the parking space. Any target status point of the vehicle in the target area meets a first constraint condition and a second constraint condition.

In a possible implementation, the auto parking system may separately obtain, through calculation, target status points that meet the first constraint condition and the second constraint condition, and then determine, based on the first constraint condition, the second constraint condition, and a status recursion curve when the vehicle moves forward at a maximum steering angle, the target area for the vehicle to enter the parking space. Therefore, the target area is used as a set of a plurality of target status points, and at any target status point included in the set, a posture for easy parking entry in the ultra-narrow parallel parking scenario is fully considered. In other words, any target status point in the target area meets the first constraint condition and the second constraint condition.

For example, the parking space is located on a right side of the vehicle, and the vehicle travels on a right side of a road. The auto parking system may separately obtain, through calculation, status points that meet the first constraint condition and the second constraint condition, and then determine, based on the first constraint condition, the second constraint condition, and a status recursion curve when the vehicle moves forward at maximum left-turn steering (that is, a steering wheel is fully turned to the left), the target area for the vehicle to enter the parking space.

For example, the parking space is located on a left side of the vehicle, and the vehicle travels on a left side of a road. The auto parking system may separately obtain, through calculation, status points that meet the first constraint condition and the second constraint condition, and then determine, based on the first constraint condition, the second constraint condition, and a status recursion curve when the vehicle moves forward at maximum right-turn steering (that is, a steering wheel is fully turned to the right), the target area for the vehicle to enter the parking space.

In an example, the first constraint condition is used to ensure that the vehicle can travel out of the parking space when the vehicle enters the parking space area and moves forward from a first target status point at a first curvature. The second constraint condition is used to ensure that the vehicle does not cross an edge of the parking space when the vehicle enters the parking space area and moves forward from the first target status point at a second curvature. In a parking entry stage in embodiments of this application, that the vehicle enters the parking space area means that the vehicle enters the parking space area to a maximum extent, for example, in a critical state in which a tail of the vehicle does not exceed an edge of the parking space area.

In an example, the auto parking system may determine a first pose based on the first constraint condition, and determine a second pose based on the second constraint condition. The first pose indicates an extreme pose in which the vehicle can travel out of the parking space when the vehicle enters the parking space area and moves forward at the first curvature, and the second pose indicates an extreme pose in which the vehicle does not cross the edge of the parking space when the vehicle enters the parking space area and moves forward at the second curvature.

For example, an attitude angle of the first pose is a minimum attitude angle $\varphi_k$, and an attitude angle of the second pose is a maximum attitude angle $\varphi_u$.

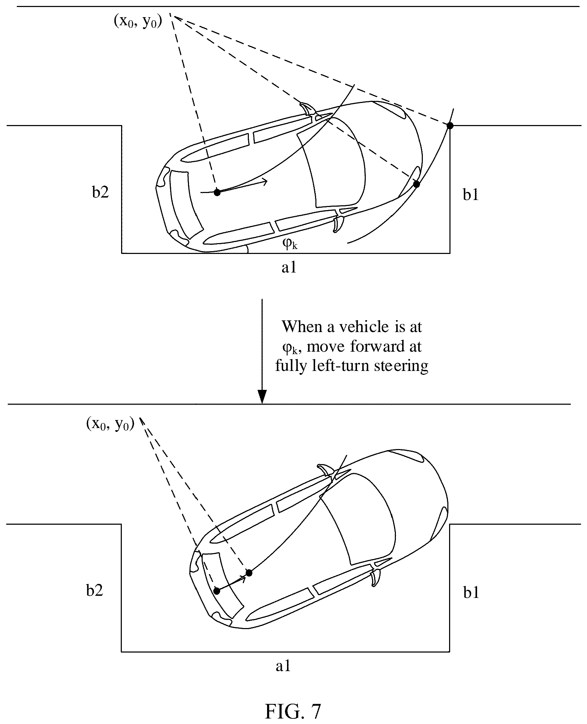

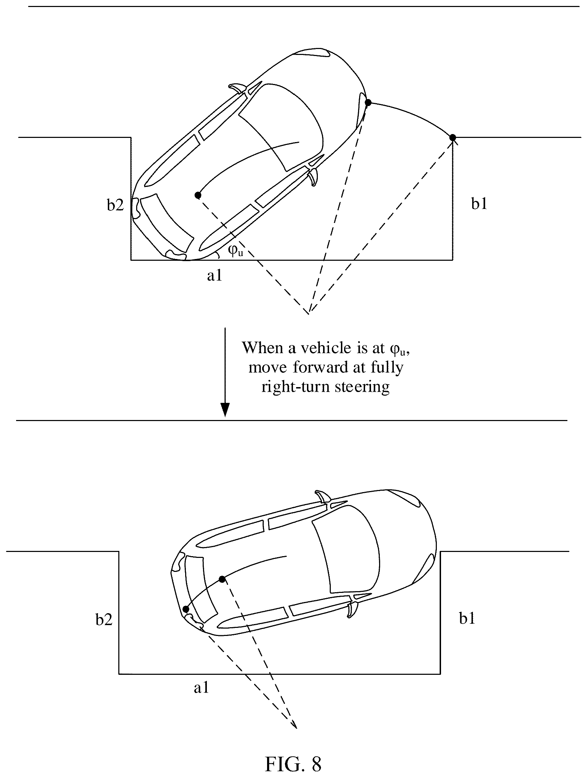

For example, the parking space is located on the right side of the vehicle, and the vehicle travels on the right side of the road. As shown in FIG. 7, when an attitude angle of the vehicle in the parking space area is equal to the minimum attitude angle $\varphi_k$, a right rear boundary of the vehicle is tangent to the inner long side a1 of the parking space. In addition, when the vehicle is at the minimum attitude angle $\varphi_k$, the vehicle can just travel out of the parking space and does not cross the edge of the parking space (specifically, for example, does not cross the front short side b1 of the parking space) when moving forward at maximum left-turn steering. As shown in FIG. 8, when the attitude angle of the vehicle in the parking space area is equal to the maximum attitude angle $\varphi_u$, the vehicle can just travel into the parking space and does not cross the front short side b1 of the parking space when moving forward at maximum right-turn steering.

For example, the parking space is located on the left side of the vehicle, and the vehicle travels on the left side of the road. When the attitude angle of the vehicle in the parking space area is equal to the minimum attitude angle $\varphi_k$, a left rear boundary of the vehicle is tangent to the inner long side a1 of the parking space. In addition, when the vehicle is at the minimum attitude angle $\varphi_k$, the vehicle can just travel out of the parking space and does not cross the front short side b1 of the parking space when moving forward at maximum right-turn steering. When the attitude angle of the vehicle in the parking space area is equal to the maximum attitude angle $\varphi_u$, the vehicle can just travel into the parking space and does not cross the front short side b1 of the parking space when moving forward at maximum left-turn steering.

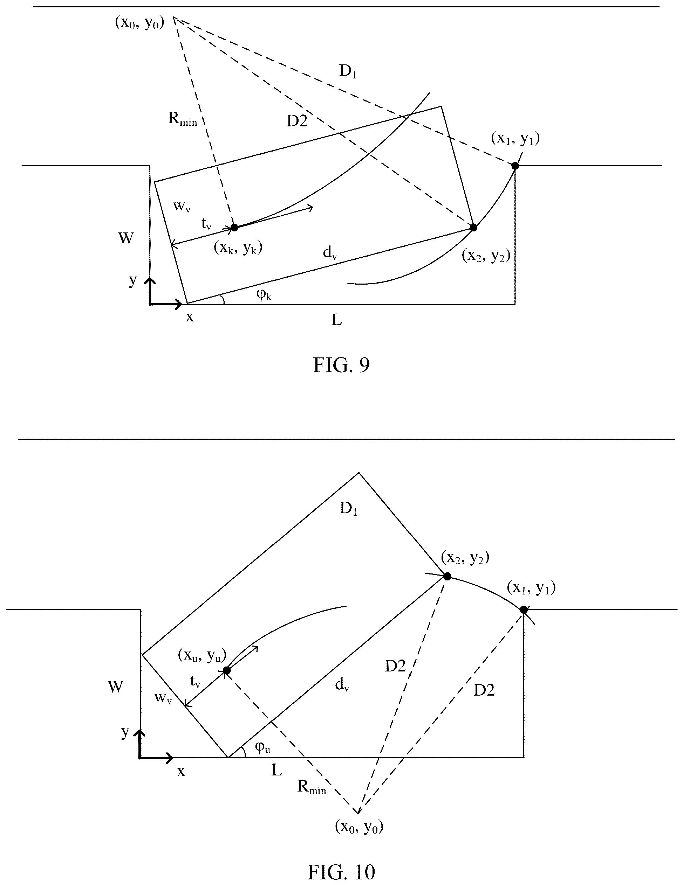

For ease of understanding, a specific method and process in which the auto parking system determines the minimum attitude angle $\varphi_k$ are described by using an example in which the parking space is located on the right side of the vehicle and the vehicle travels on the right side of the road as shown in FIG. 9. A specific method and process in which the auto parking system determines the maximum attitude angle $\varphi_u$ are described by using an example in which the parking space is located on the right side of the vehicle and the vehicle travels on the right side of the road as shown in FIG. 10.

As shown in FIG. 9, L is a length of the parking space, W is a width of the parking space, $(x_k, y_k)$ is coordinates of a rear axis center when the vehicle is at the minimum attitude angle $\varphi_k$, $(x_0, y_0)$ is coordinates of a steering circle center of the vehicle, $(x_1, y_1)$ is coordinates of a vertex that is at an outer edge of the parking space and that is near a vehicle head, $(x_2, y_2)$ is coordinates of a vertex that is near an inner side of the parking space and that is in front of the vehicle, $R_{min}$ is a minimum turning radius of the vehicle, D1 is a distance from the steering circle center to the vertex (namely, coordinates $(x_1, y_1)$) that is at the outer edge of the parking space and that is near the vehicle head, D2 is a distance from the steering circle center to the vertex (namely, coordinates $(x_2, y_2)$) that is near the inner side of the parking space and that is in front of the vehicle, $w_v$ is a vehicle width, $d_v$ is a vehicle length, and $t_v$ is a length from the rear axis center of the vehicle to a rear edge of a vehicle body.

Based on the diagram shown in FIG. 9, the auto parking system may obtain, through calculation according to the following formula 1 to formula 11, the minimum attitude angle $\varphi_k$ that meets a condition:

$$x_k = \frac{1}{2} w_v \sin \varphi_k + t_v \cos \varphi_k \quad \text{(formula 1)}$$

$$y_k = \frac{1}{2} w_v \cos \varphi_k + t_v \sin \varphi_k \quad \text{(formula 2)}$$

$$x_0 = x_k + R_{min} \cos \left( \frac{\pi}{2} + \varphi_k \right) \quad \text{(formula 3)}$$

$$x_0 = x_k + R_{min} \sin \left( \frac{\pi}{2} + \varphi_k \right) \quad \text{(formula 4)}$$

$$x_1 = L \quad \text{(formula 5)}$$

$$y_1 = W \quad \text{(formula 6)}$$

$$x_2 = w_v \sin \varphi_k + d_v \cos \varphi_k \quad \text{(formula 7)}$$

$$y_2 = d_v \sin \varphi_k \quad \text{(formula 8)}$$

$$D_1 = \sqrt{(x_0 - x_1)^2 + (y_0 - y_1)^2} \quad \text{(formula 9)}$$

$$D_2 = \sqrt{(x_0 - x_2)^2 + (y_0 - y_2)^2} \quad \text{(formula 10)}$$

$$D_2 = D_1 \quad \text{(formula 11)}.$$

It may be understood that, as shown in FIG. 9, when the vehicle moves forward at maximum left-turn steering when the vehicle is at the minimum attitude angle $\varphi_k$, the vehicle can safely travel out of the parking space, and the vertex (namely, coordinates $(x_2, y_2)$) that is near the inner side and that is in front of the vehicle does not cross the vertex (namely, coordinates $(x_1, y_1)$) that is at the outer edge of the parking space and that is near the vehicle head. Therefore, the minimum attitude angle $\varphi_k$ may indicate an extreme posture in which the vehicle can smoothly exit the parking space in the parking entry stage.

As shown in FIG. 10, L is a length of the parking space, W is a width of the parking space, $(x_u, y_u)$ is coordinates of a rear axis center when the vehicle is at the maximum attitude angle $\varphi_u$, $(x_0, y_0)$ is coordinates of a steering circle center of the vehicle, $(x_1, y_1)$ is coordinates of a vertex that is at an outer edge of the parking space and that is near a vehicle head, $(x_2, y_2)$ is coordinates of a vertex that is near an inner side of the parking space and that is in front of the vehicle, $R_{min}$ is a minimum turning radius of the vehicle, D1 is a distance from the steering circle center to the vertex (namely, coordinates $(x_1, y_1)$) that is at the outer edge of the parking space and that is near the vehicle head, D2 is a distance from the steering circle center to the vertex (namely, coordinates $(x_2, y_2)$) that is near the inner side of the parking space and that is in front of the vehicle, $w_v$ is a vehicle width, $d_v$ is a vehicle length, and $t_v$ is a length from the rear axis center of the vehicle to a rear edge of a vehicle body.

Based on the diagram shown in FIG. 10, the auto parking system may obtain, through calculation according to the following formula 12 to formula 22, the maximum attitude angle $\varphi_u$ that meets a condition:

$$x_u = \frac{1}{2} w_v \sin \varphi_u + t_v \cos \varphi_u \quad \text{(formula 12)}$$

$$y_c = \frac{1}{2} w_v \cos \varphi_u + t_v \sin \varphi_u \quad \text{(formula 13)}$$

$$x_0 = x_u + R_{min} \cos\left(-\frac{\pi}{2} + \varphi_u\right) \quad \text{(formula 14)}$$

$$x_0 = x_u + R_{min} \sin\left(-\frac{\pi}{2} + \varphi_u\right) \quad \text{(formula 15)}$$

$$x_1 = L \quad \text{(formula 16)}$$

$$y_1 = W \quad \text{(formula 17)}$$

$$x_2 = w_v \sin \varphi_u + d_v \cos \varphi_u \quad \text{(formula 18)}$$

$$y_2 = d_v \sin \varphi_u \quad \text{(formula 19)}$$

$$D_1 = \sqrt{(x_0 - x_1)^2 + (y_0 - y_1)^2} \quad \text{(formula 20)}$$

$$D_2 = \sqrt{(x_0 - x_2)^2 + (y_0 - y_2)^2} \quad \text{(formula 21)}$$

$$D_2 = D_1 \quad \text{(formula 22)}$$

It may be understood that, as shown in FIG. 10, when the vehicle moves forward at maximum right-turn steering when the vehicle is at the maximum attitude angle $\varphi_u$, the vehicle can safely travel into the parking space, and the vertex (namely, coordinates $(x_2, y_2)$) that is near the inner side and that is in front of the vehicle does not cross the vertex (namely, coordinates $(x_1, y_1)$) that is at the outer edge of the parking space and that is near the vehicle head. Therefore, the maximum attitude angle $\varphi_u$ may be used to ensure a capability of the vehicle to perform parking adjustment subsequently in the parking space.

It should be noted that, in FIG. 9 and FIG. 10, the minimum attitude angle $\varphi_k$ and the maximum attitude angle $\varphi_u$ are separately shown by using only an example in which a lower left corner of the parking space is a coordinate origin of a local coordinate system, an inner long side of the parking space is an x axis, and a rear short side of the parking space is a y axis. The coordinate origin of the local coordinate system may alternatively be set in another manner. This is not limited in embodiments of this application.

Further, after the first pose that meets the minimum attitude angle $\varphi_k$ and that can be used to ensure that the vehicle can smoothly exit the parking space after parking entry is performed and the second pose that meets the maximum attitude angle $\varphi_u$ and that can be used to ensure the capability of the vehicle to perform parking adjustment subsequently in the parking space are determined, it may be understood that, when a target posture in which the vehicle performs parking entry is any value that meets $[\varphi_k, \varphi_u]$ (including $\varphi_k$ and $\varphi_u$), it can be ensured that the vehicle smoothly enters and exits the parking space, and the capability of the vehicle to perform parking adjustment in the parking space is ensured. In view of this, in embodiments of this application, the auto parking system may determine, based on the following step 1 and step 2, the target area that meets $[\varphi_k, \varphi_u]$ in the parking space.

Step 1: Attitude angle interpolation

Step 1 is to obtain a plurality of status points that meet $[\varphi_k, \varphi_u]$ in the parking space by performing interpolation between the first pose and the second pose. Any status point that meets $[\varphi_k, \varphi_u]$ can be used to ensure that the vehicle smoothly enters or exits the parking space and ensure the capability of the vehicle to perform parking adjustment in the parking space.

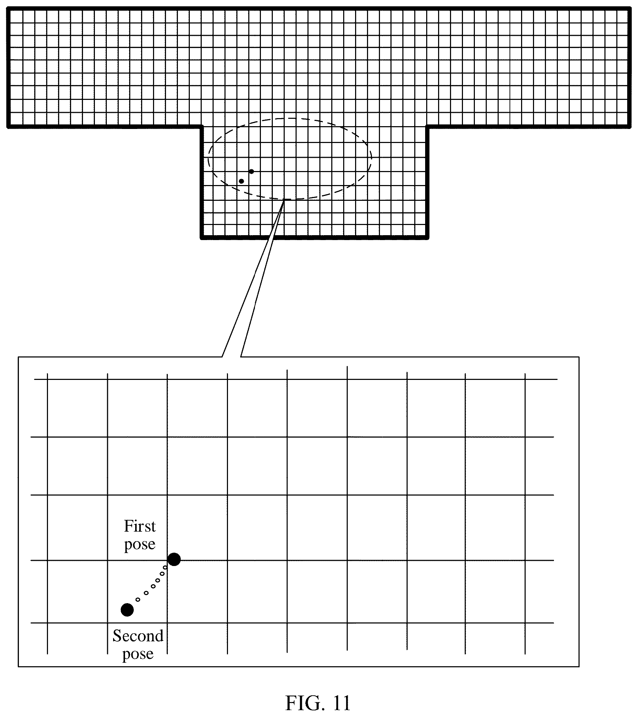

In a possible implementation, as shown in FIG. 11, the auto parking system may perform equidistant interpolation between the first pose and the second pose, to obtain a plurality of status points that meet $[\varphi_k, \varphi_u]$ in the parking space. A difference division value during interpolation may be set by the auto parking system based on one or more factors such as the computing capability of the auto parking system, the size of the vehicle drivable area, the ambient environment of the vehicle, and the user requirement. This is not limited in embodiments of this application.

Step 2: Status recursion

Step 2 is used to obtain, by performing status recursion on the plurality of status points in $[\varphi_k, \varphi_u]$ during maximum steering of the vehicle, a status recursion curve when the vehicle moves forward at maximum steering. Any status point on the status recursion curve can be used to ensure that the vehicle smoothly enters or exits the parking space and ensure the capability of the vehicle to perform parking adjustment in the parking space.

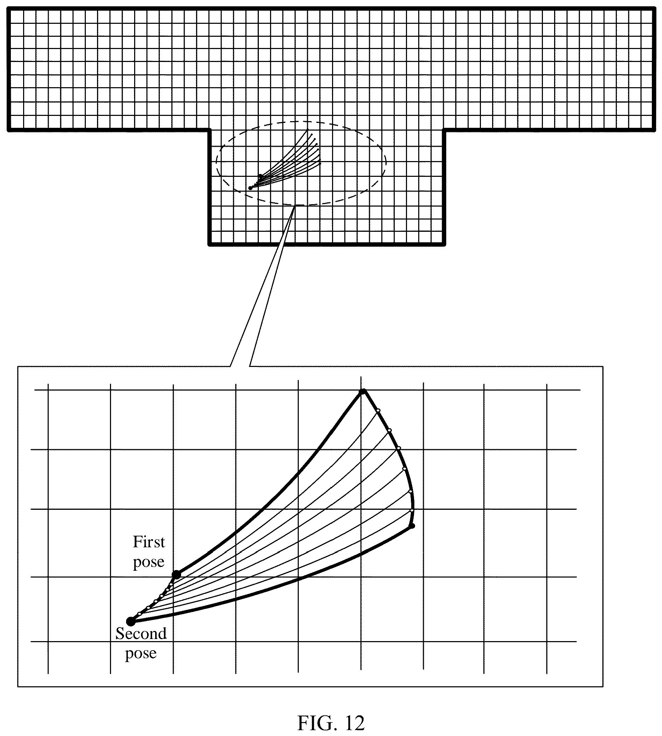

For example, the parking space is located on the right side of the vehicle, and the vehicle travels on the right side of the road. In a possible implementation, as shown in FIG. 12, the auto parking system may obtain, by performing status recursion on the plurality of status points in $[\varphi_k, \varphi_u]$ during maximum left-turn steering of the vehicle, a plurality of status recursion curves when the vehicle moves forward at maximum left-turn steering. An area corresponding to the plurality of status recursion curves shown in FIG. 12 is the target area, and each grid in the target area is one target status point.

In an example, the target status point in the target area may be represented by $(x_i, y_i, \varphi_{imax}, \varphi_{imin})$, where $(x_i, y_i)$ indicates a position of an $i^{th}$ target status point, and $\varphi_{imax}$ indicates a maximum attitude angle (upper bound) of the $i^{th}$ target status point, and $\varphi_{imin}$ indicates a minimum attitude angle (lower bound) of the $i^{th}$ target status point.

In a possible implementation, the auto parking system may perform up-uniform sampling on a curve in each grid, to obtain attitude angles of a plurality of sampling points, and record a maximum attitude angle and a minimum attitude angle in the plurality of sampling points, namely, a maximum attitude angle and a minimum attitude angle that correspond to the grid. The $i^{th}$ target status point is used as an example. A maximum attitude angle and a minimum attitude angle that correspond to the $i^{th}$ target status point are respectively $\varphi_{imax}$ and $\varphi_{imin}$. In the parking entry stage, when the vehicle reaches a position of the $i^{th}$ target status point, if an attitude angle of the vehicle meets $[\varphi_{imin}, \varphi_{imax}]$, it can be ensured that the vehicle smoothly enters and exits the parking space, and the capability of the vehicle to perform parking adjustment in the parking space is ensured.

S504: The auto parking system determines a path of the vehicle from the initial pose to the first target status point in the target area according to a path search algorithm, where a start status is determined by the auto parking system based on the obtained vehicle information.

For example, the first target status point may be represented by $(x_i, y_i, \varphi_{imax}, \varphi_{imin})$. The first target status point is used as an end status point of the parking entry stage, and is also a start status point of a parking adjustment stage.

In an example, the first target status point may be any status point in the target area.

In an example, the auto parking system may determine the first target status point in the target area according to a preset strategy. For example, the preset strategy is that the first target status point is an intermediate status point between the first pose and the second pose. For example, the first target status point may be an intermediate status point during interpolation between the first pose and the second pose. Certainly, the preset strategy may alternatively be another strategy, and the first target status point may alternatively be another status point in the target area. This is not specifically limited in this application.

In an example, the path search algorithm is, for example, a hybrid A*+RS curve algorithm.

That the auto parking system performs path planning from the initial pose to the first target status point by using the hybrid A*+RS curve algorithm may include: in a case in which coordinates and attitude angles of a start point (namely, the initial pose) and an end point (namely, the first target status point) in a discrete space are known, finding a status point with a highest priority by calculating a path cost and a heuristic cost of each status point and obtaining a priority of the status point in a path search process based on the path cost and the heuristic cost, calculating a cost value of an adjacent status point around the status point, adding the status point with the highest priority to a queue for further extension until the end point (namely, the first target status point) is extended to, and then backtracking passed status points, to generate a rough path.

The path cost is related to a moving distance cost, a front wheel angle variation cost (which is also referred to as a steering wheel cost), a gear change cost (which is also referred to as a gear switching cost), and the like of the vehicle from the initial pose to a current status point. For example, the path cost may be a weighted sum of a moving distance cost, a steering wheel cost, a gear switching cost, and the like of the vehicle from the initial pose to a current grid. The heuristic cost is used to measure a cost to be paid from the current grid to the first target status point. Each cost value in the path cost may be adjusted based on a requirement. This is not limited in embodiments of this application. For example, if it is expected that gear switching is as less as possible on a found path, a gear switching cost value needs to be increased. If it is expected that the vehicle travels straight as much as possible, a steering wheel rotation cost value needs to be increased.

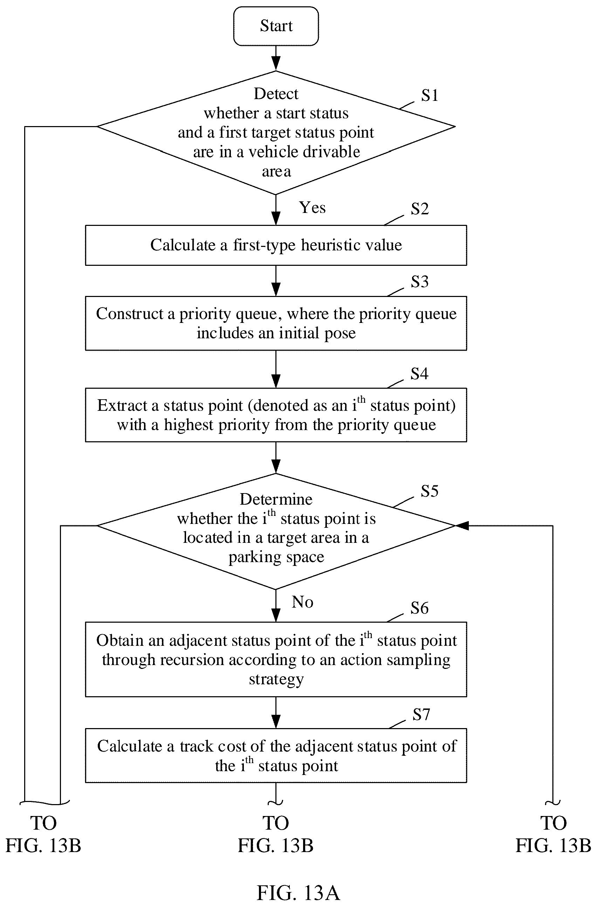

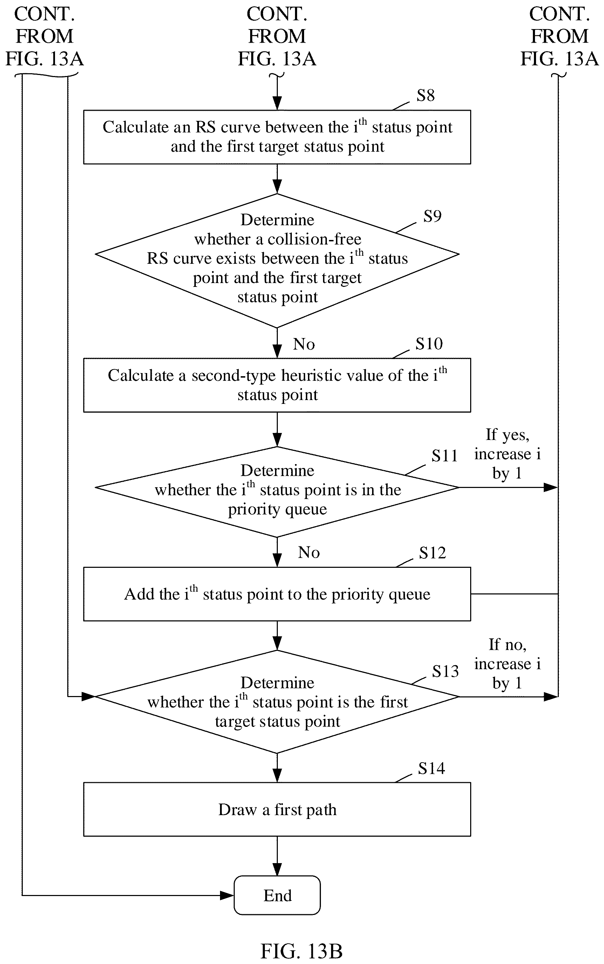

In a possible implementation, refer to FIG. 13A and FIG. 13B. FIG. 13A and FIG. 13B are a diagram of a process of performing path search by using hybrid A*+RS according to an embodiment of this application. As shown in FIG. 13A and FIG. 13B, a process of performing path search by using the hybrid A*+RS may specifically include S1 to S5.

S1: Detect whether the initial pose and the first target status point are in the vehicle drivable area.

It may be understood that, if the initial pose and/or the first target status point (namely, a status point that the vehicle is about to reach) are/is not in the vehicle drivable area, for example, on an obstacle, a path from the initial pose to the first target status point cannot be found by using the hybrid A*+RS algorithm. It can be ensured that the vehicle can reach the first target status point only when both the initial pose and the first target status point (namely, the status point that the vehicle is about to reach) are in the vehicle drivable area. Therefore, S1 is a basic prerequisite for performing path search by using the hybrid A*+RS.

If the initial pose and/or the first target status point are/is not in the vehicle drivable area, the algorithm ends. If both the initial pose and the first target status point are in the vehicle drivable area, S2 and subsequent steps continue to be performed.

S2: Calculate a first-type heuristic value.

It may be understood that a heuristic value of a status point indicates a preference of the path search process for the status point. A smaller heuristic value indicates a stronger preference for the status point (namely, a higher priority of the status point), and path exploration is preferentially performed on the status point.

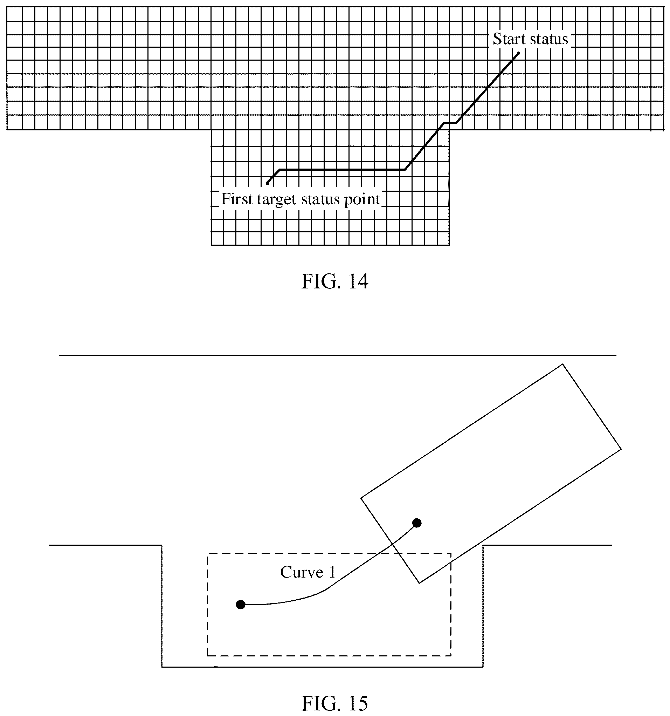

In a possible implementation, the first-type heuristic value may be a shortest obstacle avoidance distance from each status point to the first target status point in the discrete space in a two-dimensional discrete space (which is referred to as a shortest distance for obstacle avoidance in the two-dimensional discrete space for short). For example, refer to FIG. 14. FIG. 14 shows a shortest obstacle avoidance distance from an initial pose to a first target status point in a two-dimensional discrete space according to an embodiment of this application.

For example, in embodiments of this application, the auto parking system may determine, based on but not limited to an algorithm like a Dijkstra algorithm or an R* algorithm, a shortest obstacle avoidance distance between two status points in the two-dimensional discrete space. For details, refer to a conventional technology. This is not specifically limited in embodiments of this application.

In another possible implementation, the first-type heuristic value may be a heuristic value that is obtained through navigation path calculation and that is obtained when obstacle avoidance is considered from each status point to the first target status point in the discrete space. For example, when a parking space map is pre-stored in the vehicle, the auto parking system may obtain, based on the stored parking space map, the heuristic value that is obtained through navigation path calculation and that is obtained when obstacle avoidance is considered from each status point to the first target status point in the discrete space.

S3: Construct a priority queue, where the priority queue includes the initial pose.

For example, the priority queue is (open set).

A priority of each status point in the priority queue is related to the following two factors: One factor is a path cost, that is, a moving distance cost, a steering wheel cost, a gear switching cost, and the like of the vehicle from the initial pose to the current status point are considered. Another factor is a heuristic cost, namely, a heuristic value, where the heuristic value is used to measure a cost to be paid from the current status point to the first target status point. After weighted summation of a path cost and a heuristic cost of the current status point, a priority of the current status point may be determined. For example, a smaller cost value obtained through weighted summation indicates a higher priority of performing subsequent path search based on the status point. Correspondingly, a larger cost value obtained through weighted summation indicates a lower priority of performing subsequent path search based on the status point.

S4: Extract a status point (denoted as an $i^{th}$ status point) with a highest priority from the priority queue.

The status point with the highest priority in the priority queue is a status point with a minimum cost value obtained through weighted summation of the path cost and the heuristic cost.

S5: Determine whether the $i^{th}$ status point is located in the target area in the parking space.

The target area is the target area determined by the auto parking system in S503.

If the $i^{th}$ status point is located in the target area in the parking space, S13 is directly performed. If the $i^{th}$ status point is not located in the target area in the parking space, S6 continues to be performed.

S6: Obtain an adjacent status point of the $i^{th}$ status point through recursion according to an action sampling strategy.

For example, the auto parking system may use a front wheel angle and a gear as action sampling points, and perform recursion based on a kinematic model, to obtain a series of adjacent status points of the $i^{th}$ status point.

S7: Calculate a path cost of the adjacent status point of the $i^{th}$ status point.

The path cost of the adjacent status point is related to a moving distance cost, a front wheel angle variation cost (which is also referred to as a steering wheel cost), a gear change cost (which is also referred to as a gear switching cost), and the like from the initial pose to the adjacent status point. For example, the path cost of the adjacent status point may be obtained by performing weighted summation on the moving distance cost, the front wheel angle variation cost (which is also referred to as the steering wheel cost), the gear change cost (which is also referred to as the gear switching cost), and the like from the initial pose to the adjacent status point.

S8: Calculate an RS curve between the $i^{th}$ status point and the first target status point.

The RS curve is essentially a circle plus a straight line.

In an example, the RS curve between the $i^{th}$ status point and the first target status point may be any one of the following nine movement manner combinations: C|C|C, CC|C, C|CC, CSC, $CC_\beta|C_\beta C$, $C|C_\beta C_\beta|C$, $C|C_{\pi/2}SC$, $CSC_{\pi/2}|C$, and $C|C_{\pi/2}SC_{\pi/2}|C$. In the foregoing movement manner combination, C indicates a circle, S indicates a straight line, "|" indicates that a movement direction of the vehicle changes from a forward direction to a reverse direction or from a reverse direction to a forward direction (that is, the vehicle performs gear switching), a subscript $\beta$ indicates that a radian of rotation of C is $\beta$, and similarly, a subscript $\pi/2$ indicates that a radian of rotation of C is $\pi/2$.

It may be understood that there are two possibilities for the circle. For example, L indicates turning left, and R indicates turning right. In addition, because both C and S allow moving forward and reverse, L, S, and R may be positive or negative. For example, the foregoing nine movement manner combinations may be subdivided into 48 RS curves shown in the following Table 1:

Table 1

| Movement manner combination | RS curve |
| --- | --- |
| C|C|C | $(L^+R^- L^+)$, $(L^-R^+L^-)$, $(R^+L^-R^+)$, and $(R^-L^+R^-)$ |
| CC|C | $(L^+R^+L^-)$, $(L^-R^-L^+)$, $(R^+L^+R^-)$, and $(R^-L^-R^+)$ |
| C|CC | $(L^+R^-L^-)$, $(L^-R^+L^+)$, $(R^+L^-R^-)$, and $(R^-L^+R^+)$ |
| CSC | $(L^+S^+L^+)$, $(L^-S^-L^-)$, $(R^+S^+R^+)$, $(R^-S^-R^-)$, $(L^+S^+R^+)$, $(L^-S^-R^-)$, $(R^+S^+L^+)$, and $(R^-S^-L^-)$ |
| $CC_\beta|C_\beta C$ | $(L^+R_\beta^+L_\beta^-R^-)$, $(L^-R_\beta^-L_\beta^+R^+)$, $(R^+L_\beta^+R_\beta^-L^-)$, and $(R^-L_\beta^-R_\beta^+L^+)$ |
| $C|C_\beta C_\beta|C$ | $(L^+R_\beta^-L_\beta^-R^+)$, $(L^-R_\beta^+L_\beta^+R^-)$, $(R^+L_\beta^-R_\beta^-L^+)$, and $(R^-L_\beta^+R_\beta^+L^-)$ |
| $C|C_{\pi/2}SC$ | $(L^+R_{\pi/2}^+S^-R^-)$, $(L^-R_{\pi/2}^-S^+R^+)$, $(R^+L_{\pi/2}^+S^-L^-)$, $(R^-L_{\pi/2}^-S^+L^+)$, $(L^+R_{\pi/2}^+S^-L^-)$, $(L^-R_{\pi/2}^-S^+L^+)$, $(R^+L_{\pi/2}^+S^-R^-)$, and $(R^- L_{\pi/2}^-S^+R^+)$ |
| $CSC_{\pi/2}|C$ | $(L^+S^+L_{\pi/2}^+R^-)$, $(L^-S^-L_{\pi/2}^-R^+)$, $(R^+S^+R_{\pi/2}^+L^-)$, $(R^-S^-R_{\pi/2}^-L^+)$, $(R^+S^+L_{\pi/2}^+R^-)$, $(R^-S^-L_{\pi/2}^-R^+)$, $(L^+S^+R_{\pi/2}^+L^-)$, and $(L^-S^-R_{\pi/2}^- L^+)$ |
| $C|C_{\pi/2}SC_{\pi/2}|C$ | $(L^+R_{-\pi/2}^- S^-L_{\pi/2}^-R^+)$, $(L^-R_{-\pi/2}^+S^+L_{\pi/2}^+R^-)$, $(R^+L_{-\pi/2}^-S^-R_{\pi/2}^-L^+)$, and $(R^-L_{-\pi/2}^+S^+R_{\pi/2}^+L^-)$ |

It may be understood that, because the RS curve between the $i^{th}$ status point and the first target status point may be a plurality of combinations of circles and straight lines, a plurality of feasible path solutions from the $i^{th}$ status point to the first target status point may be found. In this case, searching is easier, and a search success rate is higher. Therefore, this better meets a vehicle parking requirement. Certainly, a specific path search algorithm used is not specifically limited in this application either.

S9: Determine whether a collision-free RS curve exists between the $i^{th}$ status point and the first target status point.

If there is a collision-free RS curve between the $i^{th}$ status point and the first target status point, S13 is directly performed. If there is no collision-free RS curve between the $i^{th}$ status point and the first target status point, S10 continues to be performed.

S 10: Calculate a second-type heuristic value of the $i^{th}$ status point.

The second-type heuristic (heuristic, denoted as H) value includes two parts: $H_{euc}$ and $H_{RS}$. Here, $H_{euc}$ is a heuristic value based on a shortest obstacle avoidance distance in the two-dimensional discrete space, and $H_{RS}$ is a heuristic value based on an RS curve.

In an example, the second-type heuristic value $H=W_{euc}H_{euc}+H_{RS}$.

Here, $H_{euc}$ is a shortest obstacle avoidance distance from the $i^{th}$ status point to the first target status point in the discrete space in the two-dimensional discrete space. Here, $H_{RS}$ may be obtained through calculation according to the following formula 23:

$$H_{RS}=(1+W_{kappa}N_{kappa}+W_{gear}N_{gear}+W_{other}N_{other})L_{RS} \qquad \text{(Formula 23).}$$

In formula 23, $L_{RS}$ indicates a length of a shortest RS curve from the $i^{th}$ status point to the first target status point, namely, a length of a curve 1 in FIG. 15; $N_{kappa}$ indicates a quantity of curvature changes from the $i^{th}$ status point to the first target status point (for example, the quantity of curvature changes is 2 in an example shown in FIG. 15); $N_{gear}$ indicates a quantity of times of gear switching from the $i^{th}$ status point to the first target status point (for example, the quantity of times of gear switching is 1 in the example shown in FIG. 15); $N_{other}$ indicates another factor that may be considered (the auto parking system may extend formula 23 based on an actual situation); and $W_{kappa}$, $W_{gear}$, and $W_{other}$ are respectively weights of a curvature change factor, a gear switching factor, and another factor.

It may be understood that, based on the first-type heuristic value, a specific direction in which the vehicle can reach the first target status point more quickly from the initial pose is roughly measured, but the vehicle is considered as a mass point in the method, and a movement model of the vehicle is not considered. Therefore, only a rough direction can be provided. For providing a path search adapted to the movement model of the vehicle, a heuristic function design based on an RS curve is introduced in embodiments of this application, to fully consider impact of vehicle gear switching, a curvature change, and the like on the path search in an ultra-narrow parallel parking scenario of the vehicle, so that heuristic value calculation is more appropriate and efficient, and path search efficiency and a path search success rate are greatly improved.

S11: Determine whether the $i^{th}$ status point is in the priority queue.

If the $i^{th}$ status point is located in the priority queue, searching for a next status point continues to be performed according to the method shown in S5 to S11 after i is increased by 1. If the $i^{th}$ status point is not located in the priority queue, S12 continues to be performed.

S12: Add the $i^{th}$ status point to the priority queue.

S13: Determine whether the $i^{th}$ status point is the first target status point.

If the $i^{th}$ status point is the first target status point, the auto parking system continues to perform S14.

If the $i^{th}$ status point is not the first target status point, the auto parking system continues to search for a next status point according to the method shown in S3 to S11 after i is increased by 1, until the first target status point is found.

It should be noted that, in a possible case, if the auto parking system has completed searching for all status points in the priority queue, but still fails to find the first target status point, it may be considered that a path search for the first target status point fails. In this case, the auto parking system may re-attempt to perform path search, or may change the target status point and then perform path search again, or perform other preset processing.

S14: Draw a first path.

In a possible implementation, the auto parking system may first obtain a backtracking path by backtracking previously found status points starting from the first target status point, and then segment the backtracking path based on a gear at each status point on the backtracking path, to obtain the first path.

It may be understood that curvatures of the first path found by using hybrid A*+RS are usually discontinuous, and therefore, the first path can only be considered as a rough path. To ensure that a path curvature falls within a vehicle following capability and improve path followability, in embodiments of this application, the auto parking system may perform smoothing on the path of the vehicle from the initial pose to the first target status point, so that a parking entry path curvature falls within the vehicle following capability. In this way, path followability is improved. In other words, the auto parking system may perform the following S505.

S505: The auto parking system performs smoothing on the path of the vehicle from the initial pose to the first target status point, to obtain a second path.

It may be understood that, different gears are included at the status points in the rough path found by using the hybrid A*+RS, and it needs to be ensured that gears in a same path are consistent during subsequent path smoothing. Therefore, before smoothing is performed, the auto parking system may first perform path segmentation on the rough path, and segment status points at a same gear into one path.

In a possible implementation, the auto parking system may perform smoothing on a rough path point on the path of the vehicle from the initial pose to the first target status point according to a non-linear optimization method. For example, the auto parking system may perform smoothing on the path of the vehicle from the initial pose to the first target status point with reference to a curvature constraint condition, an obstacle avoidance condition, and/or the like.

In an example, the curvature constraint condition is that, for example, a curvature of any status point on the second path cannot exceed a steering capability of the vehicle. It may be understood that a minimum curvature radius of the vehicle determines the steering capability of the vehicle. In view of this, in embodiments of this application, the auto parking system may use a curvature constraint as a constraint condition, and perform smoothing on the path from the initial pose to the first target status point.

In an example, the obstacle avoidance condition may be determined based on an optimization model for accurate obstacle avoidance, for example, a convex optimization model (for example, sequence convex optimization). A basic idea of convex optimization is to determine a local optimal solution near the rough path based on a rough path search result as an initial value. For specific descriptions of the optimization model for accurate obstacle avoidance, for example, the convex optimization model, refer to a conventional technology. Details are not described in embodiments of this application.

S506: The auto parking system determines a parking entry speed strategy corresponding to the second path, to obtain a first track (the first track is a parking entry track).

The auto parking system determines the parking entry speed strategy corresponding to the second path, to ensure effect, comfort, and the like of path following.

In an example, the parking entry speed strategy corresponding to the second path has the following feature: Both a start point speed and an end point speed of the second path are 0. In this way, effect of path following is ensured.

In an example, the parking entry speed strategy corresponding to the second path has the following feature: A jerk (jerk) value of a moving speed is less than a preset value. In this way, comfort of path following is ensured.

For a specific planning method and process of the speed strategy in the path planning process, further refer to a conventional technology. This is not specifically limited in embodiments of this application.

S507: The auto parking system indicates the vehicle to travel to the first target status point based on the planned first track.

In a possible implementation, a planning module (the planning module 430 shown in FIG. 4) of the auto parking system may send a parking entry start instruction to a control module (the control module 440 shown in FIG. 4), to indicate the control module to control the vehicle to travel to the first target status point based on the planned first track.

Further, in a possible implementation, the control module (the control module 440 shown in FIG. 4) of the auto parking system may send a control instruction to the vehicle chassis through a specific interface (the serial bus module 450 shown in FIG. 4), so that the vehicle travels to the first target status point based on the planned first track.

S508: The auto parking system determines a third path of the vehicle in the parking space area based on a real-time pose of the vehicle (where the third path is a parking adjustment path).

In the parking adjustment stage, a task of the auto parking system is mainly to adjust a posture and a lateral error in a parking lot.

For example, in the parking adjustment stage, the auto parking system may perform one or more times of gear switching and one or more curvature changes based on a real-time pose of the vehicle in the parking space and real-time ambient environment information, so that the vehicle meets a third constraint condition.

For example, the third constraint condition includes: A posture of the vehicle is approximately parallel to the parking space (for example, an included angle between a long side of the vehicle and a long side of the parking space is less than a first preset angle); and the vehicle is approximately located in a center of the parking space (for example, a distance between a center point of the vehicle and a center point of the parking space is less than a first preset distance). In an example, the parking adjustment stage mainly includes the following two stages:

Forward section: The forward section is mainly used to adjust the posture of the vehicle. For example, the auto parking system may set the front wheel angle to a maximum value to move forward until a boundary of the vehicle reaches a boundary of a safe drivable area in the parking space or the posture of the vehicle is approximately parallel to the parking space.

Backward segment: The backward segment is mainly used to adjust a lateral error. For example, the auto parking system may obtain a backward path of the vehicle through calculation in an arc tangent manner, so that the vehicle moves backward until the boundary of the vehicle reaches the boundary of the drivable area.

In some embodiments, in the parking adjustment stage, parking adjustment path planning for the forward section and the backward section performed by the auto parking system needs to be limited by a preset quantity of times of gear switching. For example, a quantity of times of gear switching cannot be excessively large, to ensure that an operation in the parking adjustment stage is not excessively complex.

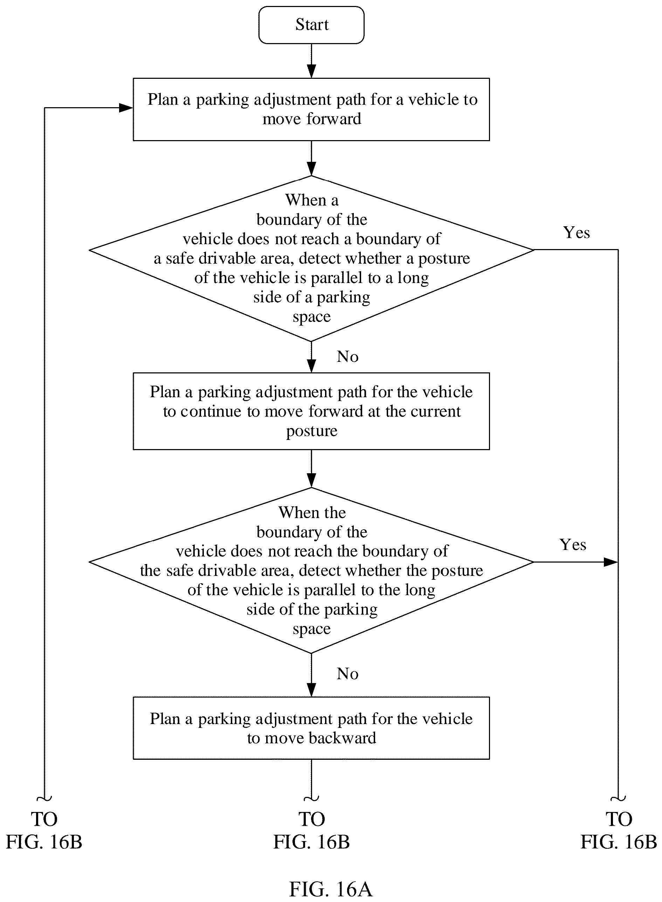

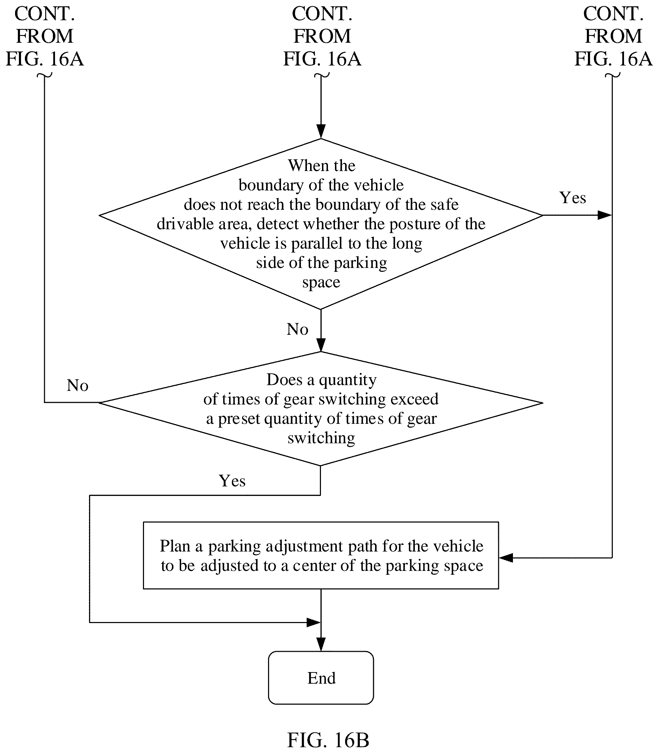

In an example, refer to FIG. 16A and FIG. 16B. FIG. 16A and FIG. 16B are a diagram of a parking adjustment process according to an embodiment of this application. As shown in FIG. 16A and FIG. 16B, in the forward section of the vehicle, the auto parking system may plan a parking adjustment path, so that the vehicle moves forward. If it is detected, when the boundary of the vehicle does not reach the boundary of the safe drivable area, that the posture of the vehicle is parallel to the long side of the parking space, the auto parking system may continue to plan the parking adjustment path based on the current posture, so that the vehicle is approximately adjusted to the center of the parking space. If it is detected, when the boundary of the vehicle does not reach the boundary of the safe drivable area, that the posture of the vehicle is not approximately parallel to the long side of the parking space, the auto parking system may continue to plan the parking adjustment path, so that the vehicle keeps the current posture and continues to move forward. Then, if it is detected, when the boundary of the vehicle reaches the safe drivable area, that the posture of the vehicle is not approximately parallel to the long side of the parking space, the auto parking system continues to plan the parking adjustment path, so that the vehicle moves backward. If it is detected, when the boundary of the vehicle reaches the safe drivable area, that the posture of the vehicle is parallel to the long side of the parking space, the auto parking system continues to plan the parking adjustment path, so that the vehicle is approximately adjusted to the center of the parking space. Further, in the backward section of the vehicle, if it is detected, when the boundary of the vehicle does not reach the boundary of the safe drivable area, that the posture of the vehicle is approximately parallel to the long side of the parking space, the auto parking system may continue to plan the parking adjustment path based on the current posture, so that the vehicle is approximately adjusted to the center of the parking space. If it is detected, when the boundary of the vehicle does not reach the boundary of the safe drivable area, that the posture of the vehicle is not approximately parallel to the long side of the parking space, the auto parking system may determine whether the quantity of times of gear switching exceeds the preset quantity of times of gear switching. If the quantity of times of gear switching exceeds the preset quantity of times of gear switching, the algorithm ends. If the quantity of times of gear switching does not exceed the preset quantity of times of gear switching, the auto parking system may continue to plan the parking adjustment path, and repeatedly perform parking adjustment path planning of the forward section and the backward section.

It should be noted that FIG. 16A and FIG. 16B are merely used as an example of the parking adjustment process. Specific implementation details in the parking adjustment path planning process are not specifically limited in this application. For example, in some other examples, if the quantity of times of gear switching exceeds the preset quantity of times of gear switching, but the posture of the vehicle is not approximately parallel to the long side of the parking space and/or the vehicle is not approximately located in the center of the parking space, the auto parking system may alternatively loose a determining criterion of being approximately parallel and/or being approximately located in the center of the parking space, for example, making the included angle between the long side of the vehicle and the long side of the parking space less than a second preset angle and making the distance between the center point of the vehicle and the center point of the parking space less than a second preset distance. The second preset angle is greater than the first preset angle, and the second preset distance is greater than the first preset distance.

In an example, in the parking adjustment stage, the auto parking system may adjust the posture and the lateral error in the parking lot based on information that is about the ambient environment of the vehicle in the parking space and that is detected by the ultrasonic radar. It may be understood that precision is high when a detection distance of the ultrasonic radar is between 0.3 meter and 5 meters. Therefore, in the parking adjustment stage, dynamic adjustment of the posture and the lateral error in the parking lot based on the information that is about the ambient environment of the vehicle in the parking space and that is detected by the ultrasonic radar can greatly improve accuracy of parking adjustment path planning.

For other related descriptions of the parking adjustment stage, refer to a conventional technology as well. This is not specifically limited in embodiments of this application.

S509: The auto parking system determines a speed strategy corresponding to the third path, to obtain a second track.

The auto parking system determines the speed strategy corresponding to the third path, to ensure effect, comfort, and the like of path following.

In an example, the speed strategy corresponding to the third path has the following features: Both a start point speed and an end point speed that correspond to a forward segment are 0, and both a start point speed and an end point speed that are of a backward segment are 0. In this way, effect of path following is ensured.

In an example, the speed strategy corresponding to the third path has the following feature: A jerk (jerk) value of a moving speed is less than a preset value. In this way, comfort of path following is ensured.

For a specific planning method and process of the speed strategy in the path planning process, further refer to a conventional technology. This is not specifically limited in embodiments of this application.

S510: The auto parking system indicates the vehicle to be parked into the parking space based on the planned second track.

In a possible implementation, the planning module (the planning module 430 shown in FIG. 4) of the auto parking system may send a parking adjustment start instruction to the control module (the control module 440 shown in FIG. 4), to indicate the control module to control the vehicle to be parked into the parking space based on the planned second track.

Further, in a possible implementation, the control module (the control module 440 shown in FIG. 4) of the auto parking system may send a control instruction to the vehicle chassis through the specific interface (the serial bus module 450 shown in FIG. 4), so that the vehicle is parked into the parking space based on the planned second track.

In some examples, after the vehicle is successfully parked into the parking space, the auto parking system may further send a parking end instruction to the control module, to indicate the control module to end control over a movement status of the vehicle. For example, the auto parking system may detect a relative position relationship between the vehicle and the parking space in real time in the moving process of the vehicle, and when determining that the relative position relationship between the vehicle and the parking space meets a relative position relationship between the vehicle and the parking space when the third path ends, the auto parking system may send the parking end instruction to the control module.

It should be noted that the flowchart shown in FIG. 5A and FIG. 5B is merely used as an example. A time sequence of specific track planning steps during auto parking is not limited in embodiments of this application. For example, the auto parking system may alternatively first plan a parking entry path and a parking adjustment path, then determine a parking entry speed strategy corresponding to the parking entry path and a parking adjustment speed strategy corresponding to the parking adjustment path, and finally indicate the vehicle to be parked into the parking space based on the planned parking entry path and parking adjustment path according to corresponding speed policies.

It may be understood that, based on an auto parking method provided in embodiments of this application, when auto parking track planning is performed, an auto parking system processes a parking process in stages, for example, in a parking entry stage and a parking adjustment stage, to fully combine a parking entry capability and a parking adjustment capability to improve path search efficiency and a path search success rate of auto parking. In the parking entry stage, the auto parking system determines, through calculation, a target status set for easy parking entry. At any target status point in the target status set, a posture for easy parking entry in an ultra-narrow parallel parking scenario is fully considered. Therefore, a good parking entry target pose can be obtained. In this way, the difficulty of performing parking entry is reduced, and path search efficiency and a path search success rate in the parking entry stage are improved. In the parking adjustment stage, the auto parking system adjusts a pose of a vehicle inside a parking space to a target pose by performing real-time perception on nearby obstacles and making full use of a drivable area.

It should be understood that the solutions in embodiments of this application may be appropriately combined for use, and explanations or descriptions of terms in embodiments may be cross-referenced or explained in embodiments. This is not limited.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It should be further understood that, in various embodiments of this application, a device or unit having a path planning function may be integrated into the vehicle. Alternatively, the auto parking system in embodiments of this application may be a device or unit having a path planning function. Alternatively, the auto parking system in embodiments of this application may establish a communication connection to a device or unit having a path planning function, and send the vehicle information and the ambient environment information of the vehicle to the device or unit having a path planning function. In this way, parking path planning is completed through the device or unit having a path planning function.

It may be understood that, to implement functions of any one of the foregoing embodiments, the auto parking system includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the auto parking system may be divided into function modules. For example, each function module corresponding to each function may be obtained through division, or two or more functions may be integrated into one processing module. The integrated module may be implemented in a form of hardware, or may be implemented in a form of a software function module. It should be noted that, in embodiments of this application, division into modules is an example, and is merely a logical function division. In an actual implementation, another division manner may be used.

It should be further understood that each module in the auto parking system may be implemented in a form of software and/or hardware. This is not specifically limited herein. In other words, the electronic device is presented in a form of a function module. The "module" herein may be an application-specific integrated circuit ASIC, a circuit, a processor and a memory that executes one or more software or firmware programs, an integrated logic circuit, and/or another component that can provide the foregoing functions.

In an optional manner, when software is used to implement data transmission, the data transmission may be implemented totally or partially in a form of a computer program product. The computer program product includes one or more computer instructions. When the computer program instructions are loaded and executed on a computer, the procedure or functions according to embodiments of this application are all or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state disk (solid-state disk, SSD)), or the like.

Method or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM, or a storage medium in any other form well-known in the art. For example, the storage medium is coupled to the processor, so that the processor can read information from the storage medium and write information to the storage medium. Certainly, the storage medium may alternatively be a component of the processor. The processor and the storage medium may be disposed in an ASIC. In addition, the ASIC may be located in an electronic device. Certainly, the processor and the storage medium may alternatively exist in the auto parking system as discrete components.

Based on the foregoing descriptions of the implementations, a person skilled in the art may clearly understand that for the purpose of convenient and brief descriptions, division into the foregoing function modules is merely used as an example for descriptions. In actual application, the foregoing functions can be allocated to different function modules for implementation based on a requirement, in other words, an inner structure of an apparatus is divided into different function modules to implement all or some of the functions described above.

**Claims**

1. An auto parking method, wherein the method comprises:

   obtaining an initial pose of a vehicle and a vehicle drivable area, wherein the vehicle drivable area comprises a parking space area;
   determining a first target status point based on a first constraint condition and a second constraint condition, wherein the first target status point indicates a position and a posture of the vehicle entering the parking space area from the initial pose;
   planning a first track from the initial pose to the first target status point; and
   after the vehicle reaches the first target status point from the initial pose, determining a second track of the vehicle in the parking space area based on a real-time pose of the vehicle in the parking space area, wherein
   the first constraint condition is used to ensure that the vehicle is capable of traveling out of the parking space area when the vehicle enters the parking space area and moves forward from the first target status point at a first curvature, and the second constraint condition is used to ensure that the vehicle does not cross an edge of the parking space area when the vehicle enters the parking space area and moves forward from the first target status point at a second curvature.

2. The method according to claim 1, wherein determining the first target status point based on the first constraint condition and the second constraint condition comprises:

   determining a first pose based on the first constraint condition, wherein the first pose indicates an extreme pose in which the vehicle is capable of traveling out of the parking space area when the vehicle enters the parking space area and moves forward at the first curvature;

determining a second pose based on the second constraint condition, wherein the second pose indicates an extreme pose in which the vehicle does not cross the edge of the parking space area when the vehicle enters the parking space area and moves forward at the second curvature;

determining, based on the first pose and the second pose, a target area for the vehicle to enter the parking space area, wherein the target area comprises a plurality of target status points; and

determining the first target status point in the target area, wherein the first target status point is any status point in the target area.

3. The method according to claim 2, wherein determining the first target status point in the target area comprises: determining the first target status point in the target area according to a preset strategy.

4. The method according to claim 3, wherein determining, based on the first pose and the second pose, the target area for the vehicle to enter the parking space area comprises: determining the target area based on tracks through which the vehicle separately moves forward from the first pose and the second pose at the first curvature.

5. The method according to any one of claims 1 to 4, wherein planning the first track from the initial pose to the first target status point comprises:

determining a first path from the initial pose to the first target status point;
performing smoothing on the first path to obtain a second path; and
performing parking entry speed planning on the second path, to obtain the first track.

6. The method according to claim 5, wherein determining the rough path from the initial pose to the first target status point comprises:
determining the rough path from the initial pose to the first target status point according to a path search algorithm.

7. The method according to claim 6, wherein determining the rough path from the initial pose to the first target status point according to the path search algorithm comprises: determining the rough path from the initial pose to the first target status point based on first information according to the path search algorithm, wherein the first information comprises a shortest distance for obstacle avoidance in a two-dimensional discrete space between a status point that the vehicle passes through and the first target status point.

8. The method according to claim 7, wherein determining the rough path from the initial pose to the first target status point according to the path search algorithm further comprises: determining the rough path from the initial pose to the first target status point based on second information according to the path search algorithm, wherein the second information comprises one or more of the following: a quantity of curvature changes of the vehicle, a quantity of times of gear switching of the vehicle, and a length of a shortest RS curve between the initial pose and the first target status point.

9. The method according to any one of claims 1 to 8, wherein

when the vehicle is in the initial pose, the parking space area is located on a right side of the vehicle, wherein the first curvature corresponds to a moving curvature of the vehicle during maximum left-turn steering, and the second curvature corresponds to a moving curvature of the vehicle during maximum right-turn steering; or

when the vehicle is in the initial pose, the parking space area is located on a left side of the vehicle, wherein the first curvature corresponds to a moving curvature of the vehicle during maximum right-turn steering, and the second curvature corresponds to a moving curvature of the vehicle during maximum left-turn steering.

10. The method according to any one of claims 1 to 9, wherein determining the second track of the vehicle in the parking space area based on the real-time pose of the vehicle in the parking space area comprises:

obtaining real-time ambient environment information of the vehicle in the parking space area; and
performing one or more times of gear switching and one or more curvature changes based on the real-time pose of the vehicle in the parking space area and the real-time ambient environment information, so that the vehicle meets a third constraint condition.

11. The method according to claim 10, wherein the third constraint condition comprises:

an included angle between the vehicle and a parking space is less than a preset angle; and
a distance between a center point of the vehicle and a center point of the parking space is less than a preset distance.

12. The method according to claim 10 or 11, wherein obtaining the real-time ambient environment information of the vehicle in the parking space area comprises:
obtaining the real-time ambient environment information of the vehicle in the parking space area based on an ultrasonic radar.

13. The method according to any one of claims 1 to 12, wherein the method further comprises:

obtaining ambient environment information in a process in which the vehicle is parked into the parking space, wherein the ambient environment information comprises a position, a size, a moving direction, and a moving speed of a target object in a preset range of the vehicle; and
controlling the vehicle to stop when it is predicted that the vehicle is about to collide with the target object.

14. The method according to any one of claims 1 to 13, wherein in a process in which the vehicle reaches the first target status point from the initial pose, the ambient environment information further comprises a static obstacle in the preset range of the vehicle; and the method further comprises:
updating the vehicle drivable area in real time based on position information of the static obstacle.

15. An auto parking system, wherein the auto parking system comprises:

a data obtaining unit, configured to obtain an initial pose of a vehicle and a vehicle drivable area, wherein the vehicle drivable area comprises a parking space area; and
a processing unit, configured to: determine a first target status point based on a first constraint condition and a second constraint condition; plan a first track from the initial pose to the first target status point; and after the vehicle reaches the first target status point from the initial pose, determine a second track of the vehicle in the parking space area based on a real-time pose of the vehicle in the parking space area, wherein
the first target status point indicates a position and a posture of the vehicle entering the parking space area from the initial pose; and the first constraint condition is used to ensure that the vehicle is capable of traveling out of the parking space area when the vehicle enters the parking space area and moves forward from the first target status point at a first curvature, and the second constraint condition is used to ensure that the vehicle does not cross an edge of the parking space area when the vehicle enters the parking space area and moves forward from the first target status point at a second curvature.

16. The system according to claim 15, wherein the data obtaining unit comprises:
a perception unit, configured to collect ambient environment data to obtain the vehicle drivable area.

17. The system according to claim 16, wherein that the processing unit determines the first target status point based on the first constraint condition and the second constraint condition comprises:

the processing unit determines a first pose based on the first constraint condition, wherein the first pose indicates an extreme pose in which the vehicle is capable of traveling out of the parking space area when the vehicle enters the parking space area and moves forward at the first curvature;
the processing unit determines a second pose based on the second constraint condition, wherein the second pose indicates an extreme pose in which the vehicle does not cross the edge of the parking space area when the vehicle enters the parking space area and moves forward at the second curvature;
the processing unit determines, based on the first pose and the second pose, a target area for the vehicle to enter the parking space area, wherein the target area comprises a plurality of target status points; and
the processing unit determines the first target status point in the target area, wherein the first target status point is any status point in the target area.

18. The system according to claim 17, wherein that the processing unit determines the first target status point in the target area comprises:

the processing unit determines the first target status point in the target area according to a preset strategy.

19. The system according to claim 18, wherein that the processing unit determines, based on the first pose and the second pose, the target area for the vehicle to enter the parking space area comprises:
the processing unit determines the target area based on tracks through which the vehicle separately moves forward from the first pose and the second pose at the first curvature.

20. The system according to any one of claims 16 to 19, wherein that the processing unit plans the first track from the initial pose to the first target status point comprises:

the processing unit determines a first path from the initial pose to the first target status point;
the processing unit performs smoothing on the first path to obtain a second path; and
the processing unit performs parking entry speed planning on the second path, to obtain the first track.

21. The system according to claim 20, wherein that the processing unit determines the rough path from the initial pose to the first target status point comprises:
the processing unit determines the rough path from the initial pose to the first target status point according to a path search algorithm.

22. The system according to claim 21, wherein that the processing unit determines the rough path from the initial pose to the first target status point according to the path search algorithm comprises: the processing unit determines the rough path from the initial pose to the first target status point based on first information according to the path search algorithm, wherein the first information comprises a shortest distance for obstacle avoidance in a two-dimensional discrete space between a status point that the vehicle passes through and the first target status point.

23. The system according to claim 22, wherein that the processing unit determines the rough path from the initial pose to the first target status point according to the path search algorithm comprises: the processing unit determines the rough path from the initial pose to the first target status point based on second information according to the path search algorithm, wherein the second information comprises one or more of the following: a quantity of curvature changes of the vehicle, a quantity of times of gear switching of the vehicle, and a length of a shortest RS curve between the initial pose and the first target status point.

24. The system according to any one of claims 15 to 23, wherein

when the vehicle is in the initial pose, the parking space area is located on a right side of the vehicle, wherein the first curvature corresponds to a moving curvature of the vehicle during maximum left-turn steering, and the second curvature corresponds to a moving curvature of the vehicle during maximum right-turn steering; or
when the vehicle is in the initial pose, the parking space area is located on a left side of the vehicle, wherein the first curvature corresponds to a moving curvature of the vehicle during maximum right-turn steering, and the second curvature corresponds to a moving curvature of the vehicle during maximum left-turn steering.

25. The system according to any one of claims 15 to 24, wherein that the processing unit determines the second track of the vehicle in the parking space area based on the real-time pose of the vehicle in the parking space comprises:

the processing unit obtains real-time ambient environment information of the vehicle in the parking space area; and
the processing unit performs one or more times of gear switching and one or more curvature changes based on the real-time pose of the vehicle in the parking space area and the real-time ambient environment information, so that the vehicle meets a third constraint condition.

26. The system according to claim 25, wherein the third constraint condition comprises:

an included angle between the vehicle and a parking space is less than a preset angle; and
a distance between a center point of the vehicle and a center point of the parking space is less than a preset distance.

27. The system according to claim 25 or 26, wherein that the processing unit obtains real-time ambient environment information of the vehicle in the parking space area comprises:
the processing unit obtains the real-time ambient environment information of the vehicle in the parking space area based on an ultrasonic radar.

28. The system according to any one of claims 15 to 27, wherein the processing unit is further configured to:

obtain ambient environment information in a process in which the vehicle is parked into the parking space; and
control the vehicle to stop when it is predicted that the vehicle is about to collide with the target object, wherein the ambient environment information comprises a position, a size, a moving direction, and a moving speed of the target object in a preset range of the vehicle.

29. The system according to any one of claims 15 to 28, wherein in a process in which the vehicle reaches the first target status point from the initial pose, the ambient environment information further comprises a static obstacle in the preset range of the vehicle; and the processing unit is further configured to:
update the vehicle drivable area in real time based on position information of the static obstacle.

30. A vehicle, wherein the vehicle comprises the auto parking system according to any one of claims 15 to 29.

31. A readable storage medium, wherein the readable storage medium stores program instructions, and when the program instructions are executed by an apparatus, the method according to any one of claims 1 to 14 is implemented.

32. A program product comprising instructions, wherein when the program product runs on an apparatus, the apparatus is enabled to perform the method according to any one of claims 1 to 14.

33. A chip system, wherein the chip system comprises a processing circuit and a storage medium, the storage medium stores program instructions, and when the program instructions are executed by the processing circuit, the method according to any one of claims 1 to 14 is implemented.

Parallel parking scenario

Perpendicular parking scenario

Angular parking scenario

FIG. 1

FIG. 2

(a)

(b)

FIG. 3

Auto parking system

Perception module (410)

Localization module (420)

Planning module (430)

Control module (440)

Serial bus module (450)

FIG. 4

S501

An auto parking system obtains vehicle information and ambient environment information of a vehicle

S502

The auto parking system determines parking space boundary information and a drivable area around a parking space based on the ambient environment information of the vehicle

S503

The auto parking system determines a target area for the vehicle to enter the parking space, where any target status point of the vehicle in the target area meets a first constraint condition and a second constraint condition

S504

The auto parking system determines a path of the vehicle from an initial pose to a first target status point in the target area according to a path search algorithm, where a start status is determined by the auto parking system based on the obtained vehicle information

TO
FIG. 5B

FIG. 5A

CONT.
FROM
FIG. 5A

S505

The auto parking system performs smoothing on the path of the vehicle from the initial pose to the first target status point, to obtain a second path

S506

The auto parking system determines a parking entry speed strategy corresponding to the second path, to obtain a first track

S507

The auto parking system indicates the vehicle to travel to the first target status point based on the planned first track

S508

The auto parking system determines a third path of the vehicle in a parking space area based on a real-time pose of the vehicle

S509

The auto parking system determines a speed strategy corresponding to the third path, to obtain a second track

S510

The auto parking system indicates the vehicle to be parked into the parking space based on the planned second track

FIG. 5B

FIG. 6

$(x_0, y_0)$

b2

b1

$\varphi_k$

a1

When a vehicle is at $\varphi_k$, move forward at fully left-turn steering

$(x_0, y_0)$

b2

b1

a1

FIG. 7

b2

b1

a1

$\varphi_u$

When a vehicle is at $\varphi_u$,
move forward at fully
right-turn steering

b2

b1

a1

FIG. 8

FIG. 9

FIG. 10

First
pose

Second
pose

FIG. 11

FIG. 12

Start

Detect
whether a start status
and a first target status point
are in a vehicle drivable
area — S1

Yes — S2

Calculate a first-type heuristic value

S3

Construct a priority queue, where the priority queue
includes an initial pose

S4

Extract a status point (denoted as an $i^{th}$ status point)
with a highest priority from the priority queue

Determine
whether the $i^{th}$ status point is
located in a target area in a
parking space — S5

No — S6

Obtain an adjacent status point of the $i^{th}$ status point
through recursion according to an action sampling
strategy

S7

Calculate a track cost of the adjacent status point of
the $i^{th}$ status point

TO
FIG. 13B

TO
FIG. 13B

TO
FIG. 13B

FIG. 13A

CONT.
FROM
FIG. 13A

CONT.
FROM
FIG. 13A

CONT.
FROM
FIG. 13A

S8

Calculate an RS curve between the $i^{th}$ status point and the first target status point

Determine whether a collision-free RS curve exists between the $i^{th}$ status point and the first target status point — S9

No — S10

Calculate a second-type heuristic value of the $i^{th}$ status point

Determine whether the $i^{th}$ status point is in the priority queue — S11

If yes, increase i by 1

No — S12

Add the $i^{th}$ status point to the priority queue

Determine whether the $i^{th}$ status point is the first target status point — S13

If no, increase i by 1

S14

Draw a first path

End

FIG. 13B

FIG. 14

FIG. 15

Start

Plan a parking adjustment path for a vehicle to
move forward

When a
boundary of the
vehicle does not reach a boundary of
a safe drivable area, detect whether a posture
of the vehicle is parallel to a long
side of a parking
space

Yes

No

Plan a parking adjustment path for the vehicle
to continue to move forward at the current
posture

When the
boundary of the
vehicle does not reach the boundary of
the safe drivable area, detect whether the posture
of the vehicle is parallel to the long
side of the parking
space

Yes

No

Plan a parking adjustment path for the vehicle
to move backward

TO
FIG. 16B

TO
FIG. 16B

TO
FIG. 16B

FIG. 16A

CONT.
FROM
FIG. 16A

CONT.
FROM
FIG. 16A

CONT.
FROM
FIG. 16A

When the boundary of the vehicle does not reach the boundary of the safe drivable area, detect whether the posture of the vehicle is parallel to the long side of the parking space

Yes

No

Does a quantity of times of gear switching exceed a preset quantity of times of gear switching

No

Yes

Plan a parking adjustment path for the vehicle to be adjusted to a center of the parking space

End

FIG. 16B

## INTERNATIONAL SEARCH REPORT

| International application No. |
|---|
| **PCT/CN2024/073523** |

| A. | CLASSIFICATION OF SUBJECT MATTER |
|---|---|

B60W30/06(2006.01)i

According to International Patent Classification (IPC) or to both national classification and IPC

| B. | FIELDS SEARCHED |
|---|---|

Minimum documentation searched (classification system followed by classification symbols)

IPC: B60W,G06F

Documentation searched other than minimum documentation to the extent that such documents are included in the fields searched

Electronic data base consulted during the international search (name of data base and, where practicable, search terms used)

CNTXT, ENTXTC, ENTXT, VEN, DWPI, WPABS, CJFD: 自动, 泊车, 车辆, 初始, 位姿, 轨迹, 目标, 区域, 条件, 行驶, 约束, 状态点, automatic, park, vehicle, initial, pose, trajectory, goal, area, condition, travel, constraint, state w point

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 113361152 A (BEIJING JINGDONG QIANSHI TECHNOLOGY CO., LTD.) 07 September 2021 (2021-09-07) <br> description, paragraphs [0037]-[0190], and figures 1-11 | 1, 5, 13-16, 20, 28-33 |
| Y | CN 114212077 A (AIWAYS AUTOMOBILE (SHANGHAI) CO., LTD.) 22 March 2022 (2022-03-22) <br> description, paragraphs [0083]-[0210], and figures 1-14 | 1, 5, 13-16, 20, 28-33 |
| A | CN 109733384 A (IFLYTEK CO., LTD.) 10 May 2019 (2019-05-10) <br> entire document | 1-33 |
| A | CN 115585822 A (BEIDOUXINGTONG ZHILIAN TECHNOLOGY CO., LTD.) 10 January 2023 (2023-01-10) <br> entire document | 1-33 |
| A | EP 0375055 A2 (PHILIPS NV) 27 June 1990 (1990-06-27) <br> entire document | 1-33 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 April 2024** | **24 April 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 113361152 | A | 07 September 2021 | None | | | |
| CN | 114212077 | A | 22 March 2022 | None | | | |
| CN | 109733384 | A | 10 May 2019 | None | | | |
| CN | 115585822 | A | 10 January 2023 | None | | | |
| EP | 0375055 | A2 | 27 June 1990 | JPH | 02238506 | A | 20 September 1990 |
| | | | | KR | 900010515 | A | 07 July 1990 |
| | | | | DE | 68921857 | D1 | 27 April 1995 |

Form PCT/ISA/210 (patent family annex) (July 2022)

**EP 4 647 308 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310118816